(19) Europäisches Patentamt
European Patent Office
Office européen des brevets

(11) EP 0 637 910 B1

(12) **EUROPEAN PATENT SPECIFICATION**

(45) Date of publication and mention of the grant of the patent: **05.06.1996 Bulletin 1996/23**

(21) Application number: **92900068.5**

(22) Date of filing: **29.11.1991**

(51) Int. Cl.$^6$: **A01N 25/22**, A01N 25/04, A01N 47/22, A01N 43/707, A01N 43/12 // (A01N25/22, 25:02, 25:08, 25:10)

(86) International application number: **PCT/DK91/00367**

(87) International publication number: **WO 92/09197 (11.06.1992 Gazette 1992/13)**

(54) **STABILIZED HERBICIDE COMPOSITIONS**

STABILISIERTE HERBIZIDZUSAMMENSETZUNGEN

COMPOSITIONS HERBICIDES STABILISEES

(84) Designated Contracting States:
**AT BE CH DE DK ES FR GB GR IT LI LU NL SE**

(30) Priority: **30.11.1990 DK 2848/90**

(43) Date of publication of application: **15.02.1995 Bulletin 1995/07**

(73) Proprietor: **KVK AGRO A/S**
**DK-4600 Koge (DK)**

(72) Inventor: **NIELSEN, Erik**
**DK-2370 Greve (DK)**

(74) Representative: **Rotne, Jens Styrup et al**
**c/o Internationalt Patent-Bureau**
**Hoeje Taastrup Boulevard 23**
**2630 Taastrup (DK)**

(56) References cited:
**EP-A- 083 437**
**EP-A- 0 142 670**
**EP-A- 0 243 872**
**EP-A- 0 253 762**
**EP-A- 0 388 239**
**WO-A-87/05778**
**DE-B- 2 638 897**

- **Römpps Chemie-Lexikon Achte, neubearbeitete und erweiterte Auflage, Band 2: Cm-G, 1981, DR: Otto-Albrecht Neumüller, see pages 1126-1127**
- **STN International, File CA, Chemical Abstracts, volume 96, no. 15, 12 April 1982, (Columbus, Ohio, US), Antalova, Olga et al: "Mixed emulsifier for herbicidal compositions", abstract 117596x, CS 190210 B 15 Sep. 1981**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.11.9/3.4

## Description

The invention relates to a herbicidal preparation, preferably in the form of a concentrate, containing at least one herbicide suspended in a finely ground form in a liquid, oily phase and selected from the group consisting of phenmedipham, ethofumesate and metamitron, wherein the total amount of the three herbicides constitutes from 1 to 50% by weight, 4 to 85% by weight of oil, further one or more emulsifier components in an amount of 1 to 40% and possibly water and possibly a filler, and a polymeric stabilizer in an amount of 0.03 to 25% selected from a group of polymers all of which have a molecular weight of at least 7.000 Dalton, all of which are solids at 60°C and which preferably by a dilatation by themselves at 20°C are stably admixable (dissoluble) in water.

Moreover, the invention relates to analogous mixtures ready for use.

Solvent-based pesticides for use in agriculture are generally marketed as liquid, completely soluble concentrates to be diluted with water prior to the final use so as to be sprayed on the fields or plants by means of conventional spray equipments. During the dilution process with water prior to the final use and by stirring without particular precautions the dissolved pesticide component may migrate from the oily phase into the added aqueous phase, the oil being at the same time emulsified in the water, thereby forming an oil-in-water emulsion.

Shelf-life-stable, aqueous suspensions of pesticides (flowables) to be diluted with water are being increasingly used during recent years. Several environmental advantages are connected with products of that type. Compared to e.g. dispersable powdery products there are no problems with dust and compared to emulsion concentrates, in which the pesticide is dissolved in a solvent that is emulsified in water by means of surfactants it is possible to avoid the use of toxic and unpleasant solvents.

Another known, but not especially widespread type of pesticide concentrates is an oily pesticide suspension in which the oil may be emulsified in water. When such a composition is diluted in water for final use, the emulsifier must be capable of distributing the oil without forming gels or lumps and distribute the pesticide in the aqueous phase. It is important that the distribution in the aqueous phase is effected rapidly and without difficulties. In view of the fact that most of the field crop spray equipments nowadays include effective stirring means, it may be accepted that a minor separation of oil or pesticide occurs on standing, but it cannot be accepted that the oil is gradually separated in such a manner that the pesticide is agglomerated in greasy layers of precipitations. The emulsifier as used should also ensure that oil as well as pesticide are effectively distributed on the plants.

On standing most of the suspension concentrates have a tendency to separate, thereby providing a clear upper layer. Normally, this does not entail any practical consequences but if the suspension includes both oil and water in one or two phases, both of said phases as well as the suspended phase of the solid particles should be agitatable to a homogeneous suspension that is not separated at once into separate fractions.

It is decisive that the emulsifier mixture in oily preparations is active under different conditions. The emulsifiers have to stabilize the pesticidal suspension concentrate. It is in particular difficult to optimize the surfactant system if the amount of emulsifier is small in which case it may be extremely difficult to distribute the oily suspension in the aqueous phase without the formation of greasy layers of precipitation comprising oil as well as pesticide particles.

Oil-containing pesticidal dispersions may be advantageous compared to aqueous systems when the oil operates as an activator in relation to the biological effect. A non-aqueous system or a system containing a mixture of oil and water may be preferred under conditions where water has a deleterious effect on the stability, e.g. when water exerts an unfavourable effect on the chemical stability, promotes the development of toxic breakdown products and/or dissolves the finely suspended, pesticidally active substances.

The disclosure of published EP-A2-142,670 deals with liquid herbicidal preparations containing as the active substance a herbicidally active amount of carbamates, such as phenmedipham, optionally in admixture with metamitron wherein the active substance in a finely ground state is dispersed in a liquid phase including at least one oily component in an amount from 5 to 75% by weight, and at least one surfactant in an amount of 5 to 60% by weight and optionally water.

The surprising feature of the latter invention is that phenmedipham in a non-dissolved form may have an optimal biological effect. Experience until then had shown that the phenmedipham had to be dissolved. However, none of the described formulations are optimal as regards storage stability and emulsifying properties. The possibilities of tank mixing with other beet pesticides for the described formulations are unsatisfactory.

The disclosure of published EP-A1-243,872 deals with stabilized, liquid pesticidal preparations, in which the active component in a finely ground condition in an amount of 1 to 55% by weight is dispersed in an aqueous phase comprising at least one oily component in an amount of 20 to 90% by weight and a surfactant in an amount of 1 to 45% by weight, the surfactant being characterized by containing a fatty alcohol and/or an amine-containing emulsifier. The advantage of the described emulsifier systems is that they offer more stable and homogeneous concentrate formulations that are rapidly distributed in the dilution water when the oil-containing suspension concentrate in a diluted form is to be sprayed on farmers fields. This also applies to the described compositions containing phenmedipham and metamitron in mixture. However, the described combination formulations are not stable when stored. This applies particularly to the physical stability, the formulations (Examples 1 to 4) after being stored for about 2 to 6 months appear to be granular and only disperse with difficulty in the dilution water.

None of the formulations described in the Examples of EP-A1-243,872 containing phenmedipham are appropriate for tank mixing with Nortron, which is an emulsifier concentrate with 200 g/l of ethofumesate from Schering AG. Ethofumesate is a very important combinational partner for phenmedipham. It should be added, however, that KVK A/S, Denmark, in 1988 introduced their first oil-containing suspension concentrate containing 16% of phenmedipham and about 5% of fatty alcohol. The trade name was Betaflow. By tank mixing with Nortron by diluting with appropriate water qualities this product offered reasonably easily sprayable mixtures. Used under practical test circumstances and dependent on the used diluting water Betaflow could, nevertheless, involve certain spraying problems. Betaflow has a pH value of 3.0 (measured at a dilution of 10% by weight in deionized water). With said pH value Betaflow is imparted the most optimal emulsifier properties. However, a smaller pH change, e.g. to pH 3.4, causes for instance a decisive change of the emulsifying ability, e.g. by tank mixing with Nortron, and it is therefore also evident that the character of the diluting water in tank mixtures with emulsifier concentrates, such as Nortron, as stated above may affect the emulsifier stability.

Another property of Betaflow is its tendency to impart crystal growth to the formulation. Stored at 20°C the crystal growth is restricted, but when stored at 50°C for about 3 months a considerable crystal growth can be seen, which is an essential disadvantage if Betaflow is to be used and stored in warmer countries, e.g. France, that is the greatest sugar beet producer of Europe. If the non-particularly optimized Examples in EP-A2-142,670 are ignored, approximately all the far more optimized formulations containing phenmedipham according to EP-A1-243,872 (except Example 19) apply a solvent refined mineral oil with a high content of liquid paraffin (>60%). Said quality of oil is chosen because it exerts the least solubility to phenmedipham (less than e.g. aromatic or naphtenic oil) and is therefore expected to give the slightest tendency to crystal growth. Betaflow thus contains a paraffin oil with 66% paraffins calculated on the total content of mineral oil corresponding to an aniline point of 95°C. In order to obtain reasonably good emulsifying properties, in particular by tank mixing with other beet pesticides, it has been necessary to apply to Betaflow an emulsifier amount of about 20% by weight calculated on the total composition. This amount of emulsifier is on a line with the matter stated in the Examples of EP-A1-243,872 which merely contain phenmedipham.

The high amount of emulsifier in Betaflow and the Examples stated in said EP patent applications further entail that the viscosity of the preparations becomes undesirably high. A typical viscosity for Betaflow, measured with a Brookfield viscometer, gear 20, spindle RV 4 (factor 100) is 2000 cP (mPa · s) and frequently even considerably higher. A high viscosity entails that the time of emptying the packaging (cans containing each 5 l) gets undesirably long and that it is difficult to completely empty the packaging.

An enhanced environmental consciousness has resulted in that in future pesticide formulations it is desired to make use of as gentle additives as possible. It is likewise desired that the amounts of pesticides as well as the adjuvants are reduced to a minimum. This also applies to the emulsifiers which are under suspicion of penetrating into the subsoil water under disadvantageous circumstances.

As a product type Betaflow has demonstrated that oil-containing suspension preparations of phenmedipham present a satisfactory, high biological activity. It has concurrently been recognized that Betaflow over and above the previous, solvent-based products presents decisive environmental advantages. Thus, the Swedish environmental control authorities have prohibited the previous isophoron-based products (isophoron is the preferred solvent for phenmedipham). It must simultaneously be concluded that there is a need for improving the formulation properties of Betaflow.

A summary of the properties is as follows:

1. A better compatibility during tank mixing with other beet pesticides
2. A smaller crystal growth in the concentrate
3. A lower viscosity
4. Products with improved environmental safety
5. Combination flowables with ethofumesat (previous patent applications have not included Examples of such flowables)
6. Combination flowables with metamitron (the formulations in the Examples of previous applications deposit and the emulsifiability deteriorates during storage)
7. Cheaper formulations (a general wish)

As stated above it is important that phenmedipham preparations are mixable in a tank with other beet pesticides. In cases where it has been attempted to mix Betaflow with other dispersable products, e.g. Goltix, containing 70% of metamitron, tank mixings have been effected without problems. On the other hand, large, sticky deposits have more or less had a tendency to precipitate, when Betaflow for instance had to be mixed in tank with Nortron or ICI's Fusilade, the latter containing as the active substance 250 g/l Fluazifop-butyl.

On the face of it, it could be imagined that using increased amounts of emulsifier in Betaflow would eliminate the problems of tank mixing with other emulsifier preparations. But this has turned out not to be correct.

The reason why Betaflow is so badly mixable with other products must be that the emulsifiable phase chiefly consists of mineral oil. On the contrary, the products to be mixed with Betaflow are solvent-based. The emulsifier systems to be used for the emulsifying of mineral oil are decisively different from the types to be used for the emulsifying of solvents

and their mixtures with dissolved pesticides. Briefly stated, the emulsifiers used for mineral oil must be considerably less soluble in water than the emulsifiers used for the emulsifying of solvents. This explains why problems of tank mixing arise but not how to solve the problems.

Mixing experiments that have contributed to the optimizing of the recipes that form the basis of the present invention invalidate the theory that a high content of emulsifier in the oil-containing phenmedipham-suspension preparation is unambiguously advantageous to the tank-mixing properties with other emulsifiable pesticidal preparations. The experiments rather seem to indicate that a lower content of emulsifier in the oily phenmedipham containing suspension preparation is to be preferred.

The observation may be characterized as extremely surprising. It has been possible, however, theoretically to advance a theory supporting the described observations. If the oil suspension preparation A containing 60% of oil (O) and 20% emulsifier (E1), (summarily expressed as $A_{100} = O_{60}$, $E1_{20}$), is to be mixed in the ratio 1:1 with the emulsion preparation B containing 60% of solvent (S) and 4% of emulsifier (E2), (summarily expressed as $B_{100} = S_{60}$, $E2_4$), the mixture may be expressed as ($A_{50}B_{50} = O_{30}$, $S_{30}$, $E1_{10}$, $E2_2$). It will thus appear that the oil-/solvent mixture ($O_{30}S_{30}$) is a uniform mixture of the emulsifiable phases of the two products, but that the emulsifier phase ($E1_{10}$, $E2_2$) of the mixed product is approximately complete dominated by the emusifier component of the oil product and therefore almost not adapted to the solvent (S).

If both products had contained 6% of the emulsifier component, the mixture AB in the ratio 1:1 would be: $A_{50}B_{50} = O_{30}$, $S_{30}$, $E1_3$, $E2_3$, and it is readily observed that in this situation there is the same ratio between the emulsifiable phases (oil and solvent) as between the emulsifier components E1 and E2, and that the ratios O/S and E1/E2 are the same independently of the mixing ratio between A and B.

The outlined theoretical explanation thus appears to confirm that a restriction of the emulsifier amounts in the oil-containing suspension preparations is desirable in cases where the preparations are to be admixed with traditional solvent-based preparations whose emulsifier content too is low.

A lowering of the emulsifier content is, however, not without problems, in particular because the preparations must at the same time also have a certain content of dispersed ionic emulsifiers. From this judgment it appears to be natural to choose an amine-containing dispersant. EP-243872-A1 raises claims for such dispersants. However, it is necessary to neutralize the amine group with a rather strong acid which sets a limit to the storage stability. Anionic emulsifiers are one possibility, but they are frequently sensitive and may form precipitations by emulsifying in calcareous water. It is often advantageous at the same time to make use of various anionic emulsifiers.

As already mentioned, the greatest emulsifying problems arise in tank mixtures with other pesticides. The fact is, however, that most pesticidal formulations make specific demands on the chemical composition of the emulsifiers as used. This demand is particularly heavy in tank mixtures when preparations having a varying pH-value are to be mixed in tank and when oil containing products shall be emulsified in a combined mixture with solvent based products and dispersable, insoluble pesticides.

The user has a decisive desire to be able in practice to mix all three types of formulations. It is therefore advantageous that the compositions contain some components exerting a stabilizing effect on all of the pesticidal formulations to be mixed by the user. It has turned out that some polymeric compounds soluble in water and with free OH-groups and other hydrophilic groups exert a general dispersing and/or stabilizing effect on the admixed products. The polymeric compounds are particularly water-dilatable cellulosic derivatives, polyvinyl alcohol, polyvinyl acetate, polyvinyl pyrrolidones, copolymerisates and in particular such compounds containing either polyvinyl acetate and/or polyvinyl pyrrolidone. The stabilizing polymers are in this specification mentioned as polymeric stabilizers.

The patent literature shows various examples of how these polymers can stabilize pesticidal suspensions. Thus, US patent No. 3 399 991 provides the information that methyl cellulose in combination with polyvinyl alcohol may stabilize finely ground pesticide in aqueous glycol solutions with from 16 to 36% glycol. The total amount of methyl cellulose and polyvinyl alcohol constitutes in all examples given in the patent from 1.25 to 2% by weight. GB patent No. 2 025 770 describes how polyvinyl alcohol and gum arabic can stabilize certain insecticidal formulations wherein 1 to 50% by weight of oily phenyl ethers may form long-term stable emulsions in water, in which the water phase simultaneously contains from 2 to 10% by weight of polyvinyl alcohol and/or gum arabic and from 1 to 20% by weight of thickener, that are preferably water soluble cellulosic derivatives. EP-A2-253,762 describes how to obtain stable, solvent-free suspensions of the oily insecticide propetamphos in water and wherein the active substance is protected against hydrolysis. The examples make use of 1% emulsifier, and from 3 to 8% by weight of polyvinylalkohol. US patent No. 4 824 663 describes how to produce stable emulsion concentrates containing up to 60% by weight dissolved or flowable insecticidal carbamates and phosphates, and wherein the emulsion contains from 0.001 to 20% by weight of co-ethoxylated/-propoxylated nonyl phenol and/or polyvinyl alcohol as the essential components for stabillizing the emulsion. Apparently, polyvinyl alcohol does not form part of any of the three examples shown in the patent. The amount of the co-polymer nonyl phenol constitutes from 4.8 to 6% by weight.

A summation of all the described examples shows that the minimum amount of polyvinyl alcohol, when the suspension contains finely ground pesticide, is 1.25% by weight, and 2% by weight when the suspended substance is an oily insecticide. Moreover the systems are characterized by consisting of an external aqueous phase in which one phase is

suspended which may either be solid or oily. The primary function of the polymers consists in preventing the suspended substance from sedimenting or agglomerating (fusing) during storing.

In the systems described in the present application the function of the polymer is somewhat different. The addition is effected to compositions that have beforehand a satisfactory storage stability and which by dilution alone and without the addition of other preparations in water to the final use concentration form reasonably stable emulsions of oil in water and therein also stable suspensions of the finely ground herbicide, which is simultaneously included in the suspension concentrate. The desired effect is observed only when to the combined emulsion/suspension in water in final dilution with the user is added a traditional solvent based emulsion concentrate so that the following phases are emulsified/dispersed in the aqueous phase:

1) Oil from the suspension preparation.
2) Solvent from the emulsion concentrate.
3) Solid from the suspension preparation.
4) Possible solid from an optional third mixture preparation that may be a water-based flowable or a dispersable granulate.

In such very composite systems that are produced by mutual dilutions of various different commercial preparations with water to a complicated spraying mixture there may occur actuations between the active substances from the various preparations and the adjuvants which the preparations also contain, or mutually between the adjuvants, and owing to an intense agitation there will generally be effected a precipitation of deposits of solid conglutinated by oil.

It has turned out that said water dilutable polymers have a general tendency either to hamper or to delay the precipitation of said deposits. It is particularly surprising that it is very small amounts of the polymeric components that are needed. A clear effect is observed by adding below 0.1% by weight of substance to the undiluted suspension concentrate. Using the concentrate in a use dilution of e.g. 1% corresponds to the polymer becomes effective in a concentration of no more than 0.001%. Conversely, there is apparently no upper limit to the amount of the polymer in the suspension concentrate, in which the concentration e.g. of 15, 20 or 25% by weight of the polymeric stabilizer, calculated on the quantity of the total composition, after the dilution and in combination with dilutions of emulsion concentrates either impedes or completely prevents the precipitation of deposits. It is an advantage that the polymer has a lower molecular weight and that its thickening effect on the aqueous phase is restricted. This entails that more molecules per unit of weight are obtained and in particular with low dosages an improved effect. On the other hand, high concentrations, of polymers with a strongly thickening effect may cause that the concentrates become undesirably viscous and therefore also difficult to handle.

The emulsifying properties of the oil containing suspension concentrate is incidentally also dependent on how optimally the emulsifier component is compounded. The polymeric stabilizer is thus a valuable supplement ensuring that the final suspension concentrate obtains appreciable emulsion stability properties. The polymeric stabilizer may contribute to reducing the emulsifier amount in the preparation, generally meaning that the tendency to crystal growth of the suspended herbicide is reduced and that the total raw material costs decrease.

It appears that the polymeric stabilizer is able to coat the surface of the finely ground herbicide in such a manner that the polymer in the same manner as charged ionic emulsifiers may prevent a conglutination of oil and herbicidal particles from occurring when diluting the preparation in water. Appropriate polymeric stabilizers are polymers which at 60°C are solid substances and which preferably via a dilatation process are stably dilutable in water, such as polyvinyl alcohol, polyvinyl pyrrolidone compounds, methyl-cellulose, (poly)hydroxyethyl-cellulose, (poly)hydroxypropyl cellulose and (poly)hydroxypropyl-methyl cellulose. The generally used chemical designation for said celluloses with the prefix (poly)hydroxy ethyl or (poly)hydroxy propyl is without the prefix (poly)-. When (poly) is added in this specification it is meant to specify that each glucose ring in the celluose molecule to a certain, but restricted extent may be substituted by various hydroxyethyl or hydroxypropyl groups, which may possibly be in alignment of each other, thereby being mutually interconnected through ether bindings.

It has turned out that when the oil containing suspension concentrate contains a polymeric stabilizer, it will frequently but not always be advantageous if the oils have a certain solubilizing effect on the used emulsifiers so that the oils and the emulsifiers in the suspension concentrate in unison constitute a common, flowable oily phase.

In accordance with the above the invention relates to herbicidal compositions in which the herbicidal component is suspended in fine-grained form in a flowable, oily liquid phase containing at least one component selected from the following group of beet herbicides consisting of phenmedipham (methyl(3-(3-tolylcarbamoyloxy)phenyl)carbamate), ethofumesate ((±)-2-ethoxy-2,3-dihydro-3,3-dimethylbenzofuran-5-yl, methane sulfonate) and metamitron (4-amino-4,5-dihydro-3-methyl-6-phenyl-1,2,4-triazine-5-on), so that the total quantity of herbicide amounts to 1 to 50% by weight, and in which the liquid phase contains one or more emulsified, solubilized, dissolved or diluted oils, the solubility of which in water at 20°C does not exceed 3% by weight, and in which the solubility of phenmedipham in the actual oil(s) does not exceed 3% by weight, so that the total oil content of the defined oil components constitutes from 4 to 85% by weight, and wherein the herbicidal compositions further contain one or more emulsifiers in an amount from 1 to 40% by weight,

and wherein the herbicidal compositions optionally contain water and optionally filler, and wherein the flowable phase is able to form an oil-in-water emulsion or microemulsion, when the composition is mixed with water, said herbicidal compositions being characterized by containing at least one polymer which at 60°C is a solid substance and which preferably through a dilatation by itself at 20°C is stably dilutable/dissolvable in water and which at the same time has a molecular weight of at least 7.000 Dalton, in that neither does the polymer include polycarboxylates nor co-polymers of oxyethylene and oxypropylene with at least 80% by weight of polyoxyethylene and polyoxypropylene, or hydrophilic biopolymers, for which the polymerization has been effected by an industrially controlled fermentation process, and in which the total content of the polymeric compound(s) constitutes from 0.03 to 25% by weight, all the stated percentages of compoundings of the composition being calculated on the basis of the weight of the total composition.

Preferred embodiments of the herbicidal compositions concerned will appear from claims 2 to 21.

The invention further relates to herbicidal compositions as defined above which are characterized in that they are in the form of a ready-to-use mixture diluted by the user, all the stated percentages for contents of the compositions being calculated on the basis of the weight of the solids content of said mixture, as defined below.

The term "the solids content of the ready-to-use mixture" as stated above is in the present specification to be interpreted as the components of the mixture which are either solids or have a boiling point at 760 mm Hg exceeding 210°C, so that solvents with a boiling point below 210°C are not included in the calculation of the solids content.

Particularly preferred herbicidal compositions according to the invention are characterized in that they are two- or multicomponent compositions containing phenmedipham in combination with ethofumesate and/or metamitron.

In the above mentioned herbicidal compositions it is preferred that the polymer(s) which at 20°C is/are stably mixable in water forms/form part of the compositions in an amount constituting at least 0.03% by weight, rather at least 0.04% by weight, better at least 0.05% by weight, preferably at least 0.07% by weight, in particular at least 0.1% by weight and especially at least 0.15% by weight and which at the same time does not exceed 25% by weight, rather does not exceed 15% by weight, better does not exeed 8% by weight, preferably does not exceed 5% by weight, in particular does not exceed 3% by weight and especially does not exceed 1.5% by weight, and wherein the ranges of amount e.g. constitute 0.03 to 25% by weight, rather constitute 0.04 to 15% by weight, better constitute 0.05 to 8% by weight, preferably constitute 0.07 to 5% by weight, in particular constitute 0.10 to 3% by weight and especially constitute 0.15 to 1.5% by weight, wherein all the stated percentages as to quantity are calculated on the basis of weight of the total composition or, if it is a ready-to-use mixture diluted by the user, calculated on the basis of weight of the solids content of said mixture (as defined above).

The polymers preferred in the compositions should preferably have a molecular weight of no less than 10.000 Dalton and especially of no less than 13.000 Dalton.

Preferred herbicidal compositions according to the invention are compositions in which the total amount of herbicide constitutes 1 to 45% by weight, preferably constitutes from 4 to 40% by weight, in particular 7 to 35% by weight and especially 10 to 30% by weight, and wherein the total oil content constitutes from 8 to 85% by weight, preferably constitutes from 12 to 77% by weight, in particular constitutes 18 to 70% by weight and especially from 25 to 64% by weight, and wherein the total amount of emulsifier content constitutes from 1 to 30% by weight, preferably from 1.5 to 13% by weight, in particular 2 to 9% by weight and especially from 2.5 to 5% by weight, all the stated percentages of the composition being calculated on the basis of weight of the total composition or, if it is a ready-to-use mixture admixed by the user, calculated on the basis of weight of the solids content of said use mixture.

In the stated herbicidal compositions it is further preferred that the solubility of the oil or the oils in water does not exceed 2% by weight, in particular does not exceed 1%. It is further preferred that the solubility of phenmedipham in the actual oil(s) does not exceed 2%, especially does not exceed 1%.

In the following the described polymers are designated polymeric stabilizers. Preferred polymeric stabilizers forming part of the compositions in amounts just mentioned above are selected among non-ionic ethers of cellulose, polyvinyl alcohol, polyvinyl alcohol derivatives, polyvinyl pyrrolidone and pyrrolidone variants.

Particularly preferred non-ionic ethers of cellulose are ($C_{1-2}$-alkyl) cellulose, ((poly)hydroxy-$C_{1-6}$-alkyl) cellulose and ((poly)hydroxy-$C_{1-6}$-alkyl)($C_{1-12}$-alkyl) cellulose, in particular ($C_1$-alkyl) cellulose, ((poly)hydroxy-$C_{1-4}$-alkyl) cellulose and ((poly)hydroxy-$C_{1-4}$-alkyl)-($C_{1-3}$-alkyl) cellulose such as methyl-cellulose, (poly)hydroxeethyl cellulose, (poly)hydroxypropyl cellulose, (poly)hydroxybutyl cellulose, (poly)hydroxy-ethyl-methyl cellulose, (poly)hydroxyethyl-ethyl cellulose, (poly)hydroxypropyl -methyl cellulose and (poly)hydroxybutyl-methyl-cellulose and hydrophobicblly modified variants thereof, e.g. reaction products, in which the defined cellulose ethers have reacted with aldehydes or difunctional aldehydes.

Preferred polyvinyl alcohol derivatives are polyvinyl alcohol, in which up to 35%, preferably 1 to 30% and especially 8 to 25% of the alcohol groups of the polyvinyl alcohol are esterified with a $C_{1-4}$ hydrocarbylcarboxylic acid, e.g. with acetic acid to acetate. Moreover, the polyvinyl alcohol may be wholly or partly converted to methyl ether or ethyl ether. Such polyvinyl alcohols are preferred, wherein up to 30% of the alcohol groups of the polyvinyl alcohol are converted to ether with methanol, ethanol, polyoxyethylene and/or polyoxypropylene. Other preferred co-polymerisates on the basis of polyvinyl alcohol are those in which at least 35% by mole, preferably at least 60% by mole of the copolymer is composed

of vinyl alcohol and/or vinyl alcohol acetate. Copolymerisates are particularly preferred in which the residual polymer is constituted by polyvinyl pyrrolidone.

Preferred polyvinyl pyrrolidone derivatives are alkylated polyvinyl pyrrolidone and polyvinyl pyrrolidone copolymerisates, in which at least 25% by mole, preferably at least 40% by mole of the copolymer is composed of vinyl pyrrolidone. The number of carbon atoms in the alkyl groups of the polymeric stabilizer must preferably be in the range from 1 to 12, in particular 1 to 6 and especially from 1 to 3. At the same time the number of alkyl groups must not be so large that the polymer at 20°C is not still stably dilutable in water. In copolymers partially composed of vinyl pyrrolidone, the remaining monomer should preferably be selected among vinyl alcohol, vinyl acetate and styrene.

The molecular weight of the polyvinyl alcohol or polyvinyl alcohol derivative is not particularly decisive of the effect. Polyvinyl alcohol is normally preferred, the molecular weight of which is in the interval between 7.000 to 200.000 Dalton, preferably in the interval 10.000 to 175.000 Dalton and especially in the interval 13.000 to 125.000 Dalton, or polyvinyl alcohol, which as a 4% solution in water at 20°C has a viscosity in the interval between 1 to 60 cP (mPa · s), preferably in the interval 2 to 40 cP (mPa · s), determined by a Brookfield LVF viscosimeter. The viscosity of the water dilutable cellulose ethers, polyvinylpyrrolidone and polyvinylpyrrolidone compounds available in the composition should as solutions of 2% in water at 20°C be low, e.g. down to approximately 2 cP (mPa · s), preferably down to 5 cP (mPa · s). It applies generally that the upper limit to the viscosity is primarily defined for practical circumstances and as regards a solution of 1% in water it must not exceed approximately 10.000, rather not exceed 6.000, preferably not exceed approximately 3.000, particularly not exceed approximately 1.000 and especially not exceed approximately 500 cP (mPa · s) determined by a Brookfield LVF viscosimeter, or a Brookfield viscosimeter according to the instructions given by the supplier of the raw materials.

The molecular weight of the polymers (polymeric stabilizers) may preferably not be below 800.000, rather not below 500.000, particularly no less than 175.000 and especially no less than 125.000 Dalton.

It has turned out that particularly advantageous polymeric stabilizers are those that are not stably admixable in water at 85°C, e.g. in a concentration of 1% by weight. If the polymeric stabilizer has been dissolved at a lower temperature it might upon heating form a gel that may possibly be stable.

In respect of the further description it is desired to state the following definitions: Hydrocarbyl (R-) refers to a straight-chained or branched group of alkyl, alkenyl or alkynyl, e.g. exemplified by ethyl ($-CH_2CH_3$), ethenyl ($-CH=CH_2$) or ethynyl ($-C\equiv CH$). The hydrocarbylene (-R-) refers to a straight-chained or branched group of alkylene, alkenylene or alkynylene, e.g. exemplified by ethylene ($-CH_2CH_2-$), ethenylene ($-CH=CH-$) or ethynylene ($-C\equiv C-$).

The word emulsifier embraces in the specification proper emulsifiers as well as dispersing agents. There is no clear limit between the definition of an emulsifier and a dispersant and a so-called emulsifier may frequently be used as a dispersing agent or vice versa. An emulsifier may either be a polymeric compound with a molecular weight which apart from the exceptions given below does not exceed 7.000 Dalton, comprising many hydrocarbyl or hydrocarbylene groups, or it must always contain at least one hydrocarbyl or hydrocarbylene group having at least 8 carbon atoms. As regards polycarboxylates and copolymerisates of oxyethylene and oxypropylene with at least 80% by weight of polyoxyethylene and polyoxypropylene, the upper limit of the molecular weight amounts anyhow to 50.000 Dalton. Moreover, the emulsifier must always contain at least one hydrophilic group, which may for instance be a polyoxyethylene group, an amine group, a sulfonic acid group, or a phosphate ester group, but this is not a sufficient condition of characterizing a substance as an emulsifier.

In the present specification the definition of emulsifiers does not include polymers which preferably via an inherent dilatation at 20°C are stably mixable (soluble) in water and all of which have a molecular weight of at least 7.000 Dalton, with the exception that polycarboxylates and copolymerisates of oxyethylene and oxypropylene with at least 80% by weight of polyoxyethylene, must always be regarded as emulsifiers when the molecular weight is below 50.000 Dalton. Said polymers are later on described as an independently defined group of components in the herbicidal compositions and are referred to as polymer stabilizers. Emulsifiers are, moreover, such as described in the sales leaflets of emulsifier suppliers and in relevant catalogues and reference books. The following publications of Mc Cutcheon are stated as an example of reference books: Detergent & Emulsifiers International Edition, 1983, Glen Rock New Jersey 07452, U.S.A, and North American Edition, 1983, Glen Rock New Jersey 07452, U.S.A.

In the present specification water insoluble esters with at least 8 carbon atoms obtained by esterification of an alkoxylated alcohol and either a mono-carboxylic acid or a dicarboxylic acid, may be regarded either as an oil or as an emulsifier. If the number of alkoxy groups in the alkoxylated alcohol is not more than 3, it may merely be regarded as an oil. If the number of alkoxy groups is 4 or more it may only be regarded as an emulsifier. Water insoluble esters with at least 8 carbon atoms formed by esterification of an alkoxylated dialcohol (glycol) and a monocarboxylic acid, may in the same manner be regarded either as an oil or as an emulsifier. If the number of alkoxy groups in the alkoxylated dialcohol does not exceed 5, it may only be regarded as an oil. If the number of alkoxy groups is 6 or more, it may only be regarded as an emulsifier.

Preferred oils forming part of the compositions concerned are those selected among carbon hydride oils, triglyceride ester oils, ester oils with one or two ester groups, resp., per molecule, aliphatic aldehydes, -ketones, -ethers, -alcohols

and -acids, in wich the ester oils with one or two ester groups preferably have from 8 to 72 carbon atoms per molecule and said, aliphatic oil components preferably have from 8 to 24 carbon atoms per molecule.

Particularly preferred oils forming part of the above compositions are such selected among carbon hydride oils with an aniline point determined according to DIN 51775 which does not exceed 90°C, preferably no more than 87.5°C, particularly not exceeding 85°C and especially no more than 82.5°C, water insoluble carboxylic acid esters preferably of aliphatic monoalcohols and aliphatic or aromatic monocarboxylic acids or aliphatic or aromatic dicarboxylic acids, respectively, and of water insoluble carboxylic esters, preferably of aliphatic dialcohols (glycols) and aliphatic or aromatic monocarboxylic acids.

Preferred carbon hydride oils are mineral oils and synthetic carbon hydride oils solely constituted by carbon and hydrogen.

By stating the combination of the mineral oil the characterization (the statements) refer to generally available distillates, such as they are purchased from the oil companies. The characteristic features of the mineral oil as described thus apply solely to base oil combinations that are not subsequently mixed further, such as generally delivered by the oil companies.

Evaluated from the physical properties of the oils preferred oils forming part of the present compositions are those which at 40°C have a kinematic viscosity of no more than 100 cSt, preferably no more than 78 cSt, in particular not exceeding 55 cSt and especially not exceeding 33 cSt. The starting boiling point must be at least 210°C, preferably at least 230°C and in particular at least 250°C.

The distribution of carbon of the mineral oils calculated according to DIN 51378 or ASTM D 2140 must preferably be so that the 22 percentual content of carbon, bound to paraffinic hydrocarbons, constitutes no more than 60%, preferably no more than 57.5%, in particular no more than 55% and especially no more than 52.5% on weight basis, calculated on the total carbon content of the mineral oil so that the total content of carbon bound to naphthenic and aromatic rings of hydrocarbon constitutes at least 40%, preferably at least 42.5%, in particular at least 45% and especially at least 47.5% calculated on the total carbon content of the mineral oil. It is desirable that the content of carbon bound to naphthenic hydrocarbons determined according to DIN 51378 or ASTM D 2140 amounts at least to 34%, preferably at least to 37%, in particular at least to 40% and especially at least to 43% calculated on the total carbon content of the mineral oil.

Particularly preferred water insoluble ester oils forming part of the present compositions are those whose number of carbon atoms in the ester is 8 to 72, preferably 10 to 60, and especially 12 to 46 per molecule.

It is desirable that the ester oils have a solidification point of no more that 40°C, preferably no more that 30°C, in particular no more than 20°C and especially no more than 10°C.

In one aspect of the invention the fraction of alcohol of the ester is derived from a preferably aliphatic monoalcohol of the formula I or II

$$R_1OH \qquad \text{I}$$

$$R_2O\text{-}R_3\text{-}(O\text{-}R_4)_n\text{-}OH \qquad \text{II}$$

wherein $R_1$ and $R_2$ per se designates a straight-chained or branched, saturated or unsaturated hydrocarbyl group having 1 to 30 carbon atoms, preferably 1 to 22 carbon atoms and $R_3$ and $R_4$ individually designate a straight-chained or branched, saturated or unsaturated hydrocarbylene chain having from 1 to 22 carbon atoms, preferably 2 to 9 carbon atoms, in particular 2 to 4 carbon atoms and especially 2 or 3 carbon atoms, and n is either 0, 1 or 2.

The following examples of alcohols of formula I and II are methanol, ethanol, propanol, isopropanol, butanol, isobutanol, amyl alcohol, hexyl alcohol, heptyl alcohol, isoheptyl alcohol, octyl alcohol, isooctyl alcohol, 2-ethyl-hexyl alcohol, nonyl alcohol, cetyl alcohol, isocetyl alcohol, ethoxy ethanol, butoxy ethanol and unsaturated analogs thereto. Preferred alcohols are isopropanol, isobutanol, octyl alcohol, isooctyl alcohol, 2-ethylhexyl alcohol and nonyl alcohol.

The acid part of the esters may be derived from a preferably aliphatic monocarboxylic acid of the formula $R_5COOH$, wherein $R_5$ is hydrogen or a straight-chained or branched, saturated or unsaturated aliphatic hydrocarbyl group with 1 to 30 carbon atoms, preferably 8 to 20 carbon atoms, or a straight-chained or branched, wholly or partly aromatic hydrocarbon group with 6 to 30 carbon atoms, preferably 6 to 20 carbon atoms, and wherein the aliphatic as well as the aromatic acid are optionally substituted by one or two hydroxy groups. Examples of such acids are butyric acid, caproic acid, caprylic acid, decanoic acid, 2-ethyl caproic acid, lauric acid, myristic acid, palmitic acid, stearic acid and hydroxy substituted stearic acid. Mixtures of technical fatty acids may further be used, such as, $C_{16}$- and $C_{18}$-fatty acids. Other examples are benzoic acid and salicylic acid.

A preferred class of esters for use in the present compositions consists of esters selected from the group consisting of 2-ethyl-hexyl laurate, 2-ethyl-hexyl myristate, 2-ethyl-hexyl palmitate, 2-ethyl-hexyl stearate, isobutyl stearate, isopropyl myristate, isooctyl esters of $C_{16}$- and $C_{18}$-technical fatty acids and mixtures thereof.

A further preferred class of acid parts is derived from unsaturated acids, such as oleic acid, ricinoleic acid, linoleic acid or linolenic acid. Examples of corresponding esters are 2-ethyl-hexyloleate and isobutyl oleate, isobutyl ricinoleate, isobutyl linolate and isobutyl linolenate.

Particularly appropriate esters are $C_{2-20}$-monoalcohol esters of oleic acic, $C_{2-12}$-monoalcohol esters of lauric acids and myristic acids and $C_{6-9}$-monoalcohol esters of palmitic acids and stearic acids.

In a further aspect of the invention the acid part of the ester is derived from an acid of the general formula HOOC-$(A)_m$-COOH, wherein m calculates 0 or 1, and wherein A designates a straight-chained or branched, saturated or unsaturated, aliphatic hydrocarbylene chain having 1 to 24 carbon atoms, preferably 2 to 16 carbon atoms, optionally substituted by one or two hydroxy groups, or A designates a divalent hydrocarbon group containing one or more aromatic rings, so that the group in total contains 6 to 24 carbon atoms, preferably 6 to 16 carbon atoms, optionally substituted by one or two hydroxy groups.

Examples of dicarboxylic acids are oxalic acid, succinic acid, 2-hydroxysuccinic acid, 2,3-dimethyl succinic acid, glutaric acid, adipic acid, pimelic acid, hexanecarboxylic acid, azelaic acid, sebacic acid and phthalic hexanedicarboxylic acid.

An appropriate ester may also be derived from an acid of the formula HOOC-A'-COOH, wherein A' designates an unsaturated hydrocarbylene chain having 2 to 24 carbon atoms, preferably 2 to 16 carbon atoms.

When the acid part in the ester is a dicarboxylic acid, both acid groups should preferably be esterified, but one of the acid groups may also be wholly or partly on free acid form, or optionally wholly or partly be converted to a salt.

Further examples of esters that may be used in the combinations according to the invention are esters, wherein the alcohol fraction is derived from a dialcohol of formula IIa, IIb, IIc or IId.

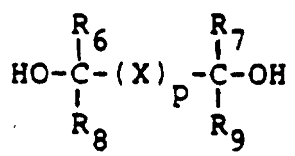

IIa

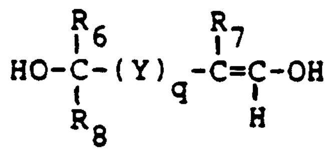

IIb

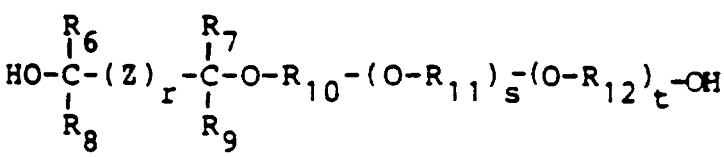

IIc

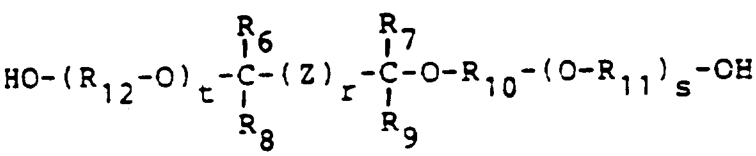

IId

wherein $R_6$, $R_7$, $R_8$ and $R_9$ are the same or different, and wherein each is hydrogen, a straight-chained or branched alkyl or a straight-chained or branched, unsaturated hydrocarbyl chain, p is 0 or 1, q is 0 or 1, r is 0 or 1, s is 0, 1 or 2, t is 0, 1 or 2; X, Y and Z are the same or different, and each is a straight-chained or branched, saturated or unsaturated hydrocarbylene chain having 1 to 15 carbon atoms, wherein the total number of carbon atoms in the dialcohol molecule exclusive of $R_{10}$, $R_{11}$ and $R_{12}$ does not exceed 22, preferably no more than 12, and $R_{10}$, $R_{11}$ and $R_{12}$ individually are a straight-chained or branched, saturated or unsaturated hydrocarbylene chain with 2 to 10 carbon atoms, preferably 2 to 4 carbon atoms and especially 2 or 3 carbon atoms. When the alcohol part in the ester is a dialcohol (glycol), both alcohol groups should preferably be esterified, but the one alcohol group may as well be unesterified and free. Optionally the ester of the dialcohol may advantageously be a mixture of a monoester and a diester.

A preferred class of esters of the above mentioned class is the one wherein the alcohol part is derived from alcohols, selected from the group consisting of ethylene glycol, tetrapolyethylene glycol, propylene glycol, dipropylene glycol, hexylene glycol, dimethylpropane diol and 2,2,4-trimethylene pentane (-1,3)-diol.

The acid part in esters, wherein the alcohol part is derived from a dialcohol of the formula IIa, IIb, IIc or IId, is derived from monocarboxylic acids of the formula $R_{13}COOH$, wherein $R_{13}$ is hydrogen or a straight-chained or branched, saturated or unsaturated, aliphatic hydrocarbyl group having 1 to 30 carbon atoms, preferably 8 to 20 carbon atoms, or a straight-chained or branched, wholly or partly aromatic hydrocarbon group with 6 to 30 carbon atoms, preferably 6 to 20 carbon atoms, and wherein both the aliphatic or the wholly or partly aromatic carboxylic acid is optionally substituted by 1 or 2 hydroxy groups. This acid may preferably be selected from the group consisting of methanoic acid, acetic acid, propanoic acid, isopropanoic acid, butyric acid, isobutyric acid, lactic acid, valeric acid, caproic acid, isoheptanoic acid, caprylic acid, isocaprylic acid, 2-ethylcaproic acid, nonanoic acid and decanoic acid and unsaturated variants thereof together with benzoic acid and salicylic acid and mixtures of technical $C_{12}$-, $C_{14}$-, $C_{16}$- and $C_{18}$ fatty acids, e.g. technical oleic acid. Various acids may be used for the esterification of the two alcohol groups of the dialcohol.

Preferred esters for use in the compositions according to the invention are thus selected from the group consisting of ethylene glycol diisobutyrate, tetraethylene glycol dioleate, propylene glycol diisobutyrate, propylene glycol dioleate, dipropylene glycol dioleate, hexylene glycol monoisobutyrate, hexylene glycol diisobutyrate, dimethylpropanediol monoisobutyrate, dimethylpropanediol diisobutyrate, 2,2,4-trimethylpentane-(1,3)-diol monoisobutyrate and 2,2,4-trimethylpentane-(1,3)-diol diisobutyrate.

Examples of esters supposed to be particularly useful in herbicidal preparations are: hexyl acetate, 2-ethylhexyl acetate, octyl acetate, isooctyl acetate, cetyl acetate, dodecyl acetate, tridecyl acetate; butyl butyrate, isobutyl butyrate, amyl isobutyrate, hexyl butyrate, heptyl butyrate, isoheptyl butyrate, octyl butyrate, isooctyl butyrate, 2-ethylhexyl butyrate, nonyl butyrate, isononyl butyrate, cetyl butyrate, isocetyl butyrate; ethyl hexanoate, propyl hexanoate, isopropyl hexanoate, butyl hexanoate, isobutyl hexanoate, amyl hexanoate, hexyl hexanoate, heptyl hexanoate, isoheptyl hexanoate, octyl hexanoate, 2-ethylhexyl hexanoate, nonyl hexanoate, isononyl hexanoate, cetyl hexanoate, isocetyl hexanoate; methyl octanoate, ethyl octanoate, propyl octanoate, isopropyl octanoate, butyl octanoate, isobutyl octanoate, amyl octanoate, hexyl octanoate, heptyl octanoate, isoheptyl octanoate, octyl octanoate, isooctyl octanoate, 2-ethylhexyl octanoate, nonyl octanoate, isononyl octanoate, cetyl octanoate, isocetyl octanoate; methyl 2-ethylhexanoate, ethyl 2-ethylhexanoate, propyl 2-ethylhexanoate, isopropyl 2-ethylhexanoate, butyl 2-ethylhexanoate, isobutyl 2-ethylhexanoate, isoamyl 2-ethylhexanoate, hexyl 2-ethylhexanoate, heptyl 2-ethylhexanoate, isoheptyl 2 -ethylhexanoate, octyl 2-ethylhexanoate, isooctyl 2-ethylhexanoate, 2-ethylhexyl 2-ethylhexanoate, nonyl 2-ethylhexanoate, isononyl 2-ethylhexanoate, cetyl 2-ethylhexanoate, isocetyl 2-ethylhexanoate; methyl decanoate, ethyl decanoate, propyl decanoate, isopropyl decanoate, butyl decanoate, isobutyl decanoate, isoamyl decanoate, hexyl decanoate, heptyl decanoate, isoheptyl decanoate, octyl decanoate, isooctyl decanoate, 2-ethylhexyl decanoate, nonyl decanoate, isononyl decanoate, cetyl decanoate, isocetyl decanoate; methyl laurate, ethyl laurate, propyl laurate, isopropyl laurate, butyl laurate, isobutyl laurate, isoamyl laurate, hexyl laurate, heptyl laurate, isoheptyl laurate, octyl laurate, isooctyl laurate, 2-ethylhexyl laurate, nonyl laurate, isononyl laurate, cetyl laurate, isocetyl laurate, methyl oleate, ethyl oleate, propyl oleate, isopropyl oleate, butyl oleate, isobutyl oleate, isoamyl oleate, hexyl oleate, heptyl oleate, isoheptyl oleate, octyl oleate, isooctyl oleate, 2-ethylhexyl oleate, nonyl oleate, isononyl oleate, cetyl oleate, isocetyl oleate; diethyl succinate, dipropyl succinate, diisopropyl succinate, dibutyl succinate, diisobutyl succinate, diisoamyl succinate, diheptyl succinate, diisoheptyl succinate, dioctyl succinate, diisooctyl succinate, di-2-ethylhexyl succinate, dinonyl succinate, diisononyl succinate, dicetyl succinate, diisocetyl succinate; dimethyl adipate, diethyl adipate, dipropyl adipate, diisopropyl adipate, dibutyl adipate, diisobutyl adipate, diisoamyl adipate, dihexyl adipate, diheptyl adipate, diisoheptyl adipate, dioctyl adipate, diisooctyl adipate, di-2-ethylhexyl adipate, dinonyl adipate, diisononyl adipate, dicetyl adipate, diisocetyl adipate, isopropyl myristate, isobutyl myristate, butyl myristate, amyl myristate, hexyl myristate, heptyl myristate, isoheptyl myristate, octyl myristate, 2-ethylhexyl myristate, nonyl myristate, isononyl myristate, cetyl myristate, isocetyl myristate; isopropyl palmitate, isobutyl palmitate, butyl palmitate, amyl palmitate, hexyl palmitate, heptyl palmitate, isoheptyl palmitate, octyl palmitate, 2-ethylhexyl palmitate, nonyl palmitate, isononyl palmitate, cetyl palmitate, isocetyl palmitate; isopropyl stearate, isobutyl stearate, butyl stearate, amyl stearate, hexyl stearate, heptyl stearate, isoheptyl stearate, octyl stearate, 2-ethylhexyl stearate, nonyl stearate, isononyl stearate, cetyl stearate and isocetyl stearate.

In a particular embodiment of the present compositions the oily phase of said compositions includes at least two different ester oils.

Preferred compositions are mixtures of carbon hydride oils and ester oils, in which the ratio of mineral oil/ester oil is 9:1-1:9, preferably 6:1-1:6, in particular 4:1-1:4, and especially 2:1-1:2.

Other interesting herbicidal preparations containing phenmedipham in combination with ethofumesate and/or metamitron, are those containing both mineral oils and ester oils, in which the ratio mineral oil/ester oil is 19:1-1:2, preferably 9:1-9:11 and particularly 5:1-2:1.

Advantageous herbicidal preparations are those having a water content of at least 2%, rather at least 3%, preferably at least 4%, in particular at least 8% and especially at least 11%, and the quantity of water amounts to no more than 65%, rather no more than 52%, preferably no more than 42%, in particular no more than 37% and especially no more

than 29%, and the interval quantities of water e.g. constitute 2 to 65%, rather 3 to 52%, preferably 4 to 43%, in particular 8 to 37% and especially 11 to 29% by weight of the total composition.

In view of the storage stability preferred compositions in which the pesticidal component consists of phenmedipham in combination with ethofumesate and/or metamitron, and which contain water when the composition contains ethofumesate, are those in which the water amount constitutes 2 to 65%, rather 3 to 52%, preferably 4 to 43%, in particular 8 to 37% and especially 11 to 29% on the basis of weight of the total composition, and when the composition contains metamitron, those in which the water amount constitutes 0.3 to 12%, rather 0.5 to 8%, preferably 1.5 to 6%, particularly 2 to 3.5%, an especially 2.2 to 3% on the basis of weight of the total composition.

Interesting herbicidal preparations containing phenmedipham in combination with ethofumesate, are those in which the ratio of weight between phenmedipham and ethofumesate is in the range 6:1 to 1:6, preferably in the range 4:1 to 1:4, particularly in the range 3:1 to 1:3 and especially in the range 2:1 to 1:2.

Interesting herbicidal preparations containing phenmedipham in combination with metamitron, are those in which the ratio of weight between phenmedipham and metamitron is in the range 1:1 to 1:10, preferably in the range 1:1.5 to 1:8, in particular in the range 1:2 to 1:6 and especially in the range 1:3 to 1:5.

When the herbicidal preparation has a low emulsifier content, e.g. below 18%, preferably below 13%, particularly below 9% and especially below 5%, calculated on the basis of weight of the total composition and the composition contains water in an amount of 0.3 to 65%, rather of 0.5 to 52%, preferably of 6 to 43%, in particular of 8 to 37% and especially of 11 to 29% on the basis of weight of the total composition, it may probably be advantageous in dependence on the combination of oils that the formulation as stabilizer contains less than 1% calcium-, magnesium-or aluminium-silicate, preferably less than 0.7% of calcium-, magnesium- or aluminium silicate and especially less than 0.4% calcium-, magnesium- or aluminium-silicate.

Preferred particle sizes of the fine-grained suspended herbicide are those in which 90% on the basis of weight of the suspended herbicide has a particle size below 10μ, preferably below 7μ, rather below 5μ and especially below 3μ. If the oil phase by dilution with water is emusified as oil drops below 1μ, the determination of the grain size may be effected with a Malvern particle sizer type 3600 E.

Advantageous compositions in accordance with the invention which contain phenmedipham and/or ethofumesate, and which are characteristic in being easy to manufacture in a controllable manner and are long-time stable are those in which the herbicidal component has either been obtained in an aqueous phase in a finely dispersable form or has been ground in an aqueous dispersion, characterized in that the water content during manufacturing amounts at least to 30%, preferably at least to 36%, and especially at least to 43% on the basis of weight of the total herbicidal dispersion, and in which the herbicide is obtained with a particle size, so that 90% by weight of the suspended herbicide measured with a Malvern particle sizer of the type 3600 E has a particle size below 10μ, preferably below 7μ, in particular below 5μ and especially below 3μ, which generally is finer compared to what is normally obtainable if the grinding is effected in an oily phase. Grinding in water entails generally the advantage that the aqueous phase for humidifying reasons contains one or more emulsifiers. An admixture with oil and optionally emulsifier is effected after preparing in a finely ground form in water. The completed pesticidal composition must likewise be characterized by containing water, rather in an amount in excess of 6%, preferably in excess of 8%, in particular in excess of 11% and especially in excess of 18% on the basis of weight of the total composition. The water content must constitute no more than 65%, preferably no more than 52%, in particular no more than 43%, and especially no more than 29%. Extremely active compositions are those containing simultaneously one of the above described water insoluble ester oils in an amount of 4 to 87%, rather of 8 to 77%, preferably in an amount of 12 to 70%, in particular of 18 to 64% and especially of 25 to 50% calculated on the basis of weight of the total composition.

When optimizing emulsified preparations it is standard to adapt the emulsifier system to the solvent and the dissolved substance. It is desirable in the described compositions also to be able to adjust the combination of oils. Besides containing carbon hydride oil and/or water insoluble ester oils and other traditional oil components the particularly preferred herbicidal compositions also contain emulsion controlling oil components selected from the group consisting of aliphatic, unsaturated, straight-chained or branched $C_{17-25}$ hydrocarbyl carboxylic acids as oleic acid, linoleic acid and linolenic acid and other aliphatic, unsaturated $C_{17-25}$ hydrocarbyl carboxylic acids substituted by one or two hydroxy groups, e.g. ricinoleic acid; aliphatic, saturated and branched $C_{17-25}$ hydrocarbyl carboxylic acids, e.g. isostearic acid and other aliphatic, saturated, branched $C_{17-25}$ hydrocarbyl carboxylic acids substituted by one or two hydroxy groups; aliphatic, saturated or unsaturated, straight-chained or branched $C_{7-16}$ hydrocarbyl carboxylic acids, e.g. isononanoic acid and other aliphatic, saturated or unsaturated, straight-chained or branched $C_{7-16}$ hydrocarbyl carboxylic acids substituted by one or two hydroxy groups, and finally aliphatic, saturated or unsaturated, straight-chained or branched $C_{9-25}$ hydrocarbyl alcohols, preferably $C_{10-21}$ hydrocarbyl alcohols, wherein the total amount of the emulsion controlling oil components constitutes 0.5 to 20%, preferably 1 to 15%, particularly 1.5 to 11% and especially 2 to 8% on the basis of weight of the total composition or, if it is a ready-to-use mixture diluted by the user, calculated on the basis of the weight of the solids content of said mixture.

The grain size of the herbicidally active substances dispersed in the composition affects the viscosity. The amount of dispersed herbicide is also decisive of the viscosity. When the composition solely contains phenmedipham in a concentration of ≤160 g/l, and when phenmedipham has been ground/finely distributed so that a measuring of the particle size determined by a Malvern particle sizer of the type 3600 E by using the low-effect laser light diffraction technique or an equivalent metering method indicates that 90% on the basis of weight of the total amount of phenmedipham has a grain size smaller than 3-4μ, the viscosity at 22°C in the described compositions, measured by a Brookfield viscometer, gear 20, with a spindle of the RV type, will be lower than 1500 cP (mPa · s), preferably lower than 1350 cP, in particular be lower than 1200 cP, and especially be lower than 1000 cP.

Preferred compositions according to the invention are those containing finely ground herbicide selected among phenmedipham, ethofumesate and metamitron in an amount of 1 to 35%, preferably in an amount of 10 to 30% on the basis of weight of the total composition which at 22°C measured by a Brookfield viscometer, gear 20, with a spindle of the RV type has a viscosity lower than 1500 cP (mPa · s), preferably lower than 1350 cP, in particular lower than 1200 cP, and especially lower than 1000 cP.

Traditional solvent-based phenmedipham preparations must have a specific emulsifier content if the biological effect should attain its optimum. Thus, the disclosure of SE patent application No. 357 486, Schering, states that the ratio between phenmedipham and surfactant must be 2:1 to 1:2 corresponding to the fact that the emulsifier content in a 160 g/l preparation varies between 80 and 320 g/l. The equivalent, NL patent states a ratio of 1:1 to 1:2 corresponding to 160 to 320 g/l emulsifier. Schering's emulsion concentrate Betanal, containing 157 g/l phenmedipham, has a content of about 200 g/l emulsifier, and the previously mentioned oil-containing suspension preparation Betaflow containing 160 g/l phenmedipham and the corresponding product Betanal+ from Schering likewise has an emulsifier content of about 200 g/l. It is therefore surprising that the compositions which according to the invention have a low emulsifier content when the active agent content is the same possess a biological activity on a level with that of Betanal. This also applies to preparations with an emulsifier content for instance lower than 50 g/l. In addition, it is possible to reduce the quantity of oil so that the preparation contains a certain amount of water and still obtain a good, biological effect. The described low-paraffinic mineral oils impart a good chemical stability to the compositions. The described water insoluble ester oils that are easily biologically degradable are to be preferred for ecological reasons and as regards effects.

When the composition contains PMP its pH-value measured in a dilution of 10% in deionized water must range from neutral to moderately acidic. The pH-value should not exceed 6, preferably not exceed 5.5, in particular not exceed 5.0 and especially not exceed 4.7 The pH-value must be at least 2, preferably at least 3.2, in particular at least 3.5 and especially at least exceed 3.8. If the composition contains water insoluble ester oils or esterified emulsifiers it is for storing reasons preferable that the pH-value (10% solution) amounts at least to 3.2 to 3.5.

The emulsifier component of the composition must preferably comprise at least one non-ionic emulsifier and at least one ionic emulsifier.

Particularly preferred compositions are those in which the emulsifier component of the composition comprises at least one non-ionic emulsifier and at least one anionic emulsifier and optionally other stabilizers such as aromatic acid stabilizers.

The non-ionic emulsifier(s) should preferably constitute 50 to 99%, preferably 58 to 97%, in particular 65 to 95% and especially 25 to 90% on the basis of weight of the total emulsifier amount (emulsifier component). The anionic emulsifiers should preferably constitute 1 to 50%, preferably 3 to 42%, in particular 5 to 35% and especially 10 to 25% on the basis of weight of the total emulsifier amount (emulsifier component).

Preferred compositions are those in which the total amount of anionic emulsifiers constitutes no more than 4.4%, rather constitutes no more than 3.8%, preferably constitutes no more than 3%, in particular constitutes no more than 2.4%, and especially constitutes no more than 1.8%, and which simultaneously is at least 0.03%, rather is at least 0.05%, preferably is at least 0.07%, in particular is at least 0.1% and especially is at least 0.14%, and in which the interval limits for instance constitutes 0.03 to 4.4%, rather constitutes 0.05 to 3,8%, preferably constitutes 0.07 to 3.0%, in particular constitutes 0.1 to 2.4% and especially constitutes 0.14 to 1.8%, all the above percentages being on the basis of weight of the total composition or, in case of a ready-to-use mixture diluted by the user, calculated on the basis of weight of the solids content of said mixture.

It is particularly advantageous when the composition contains one or more anionic emulsifiers that it only to a limited extent or not at all contains amine containing emulsifiers (e.g. an ethoxylated amine or an amfolyte), so that a possibly simultaneous content of one or more amine containing emulsifiers is no more than 2.4%, preferably no more than 1.8%, in particular no more than 1.2% and especially no more than 0.6% calculated on the basis of weight of the total composition or, in case of a ready-to-use mixture diluted by the user, calculated on the basis of weight of the solids content of said mixture, and in which the amine containing emulsifiers being available either on un-neutralized form or salt form as regards quantity must be calculated on the form in which they are available in the formulation. It is an advantage that the anionic emulsifier(s) does(do) not simultaneously contain an amide group.

Advantageous compositions containing a mixture of a non-ionic emulsifier and an anionic emulsifier and optionally an amine containing emulsifier are those, in which the total content of the anionic emulsifiers and the possible amine containing emulsifiers constitutes no more than 3.8%, preferably no more than 3%, particularly constitutes no more than 2.4%, and especially constitutes no more than 1.8%, and which simultaneously is at least 0.03%, rather at least 0.05%, preferably at least 0.07%, in particular is at least 0.1% and especially is at least 0.14%, all the given percentages being

on the basis of weight of the total composition or, in case of a ready-to-use mixture diluted by the user, calculated on the basis of weight of the solids content of said mixture, and wherein the ionic emulsifier being available in un-neutralized form or salt form as regards quantity must be calculated on the form in which it is available in the formulation.

Preferred non-ionic emulsifiers are those selected among ethoxylated, propoxylated or co-ethoxylated/propoxylated mono-, di-, tri- or tetra-$C_{1-18}$-alkylphenol, including in particular $C_{4-15}$-alkyl phenol and analog, unsaturated hydrocarbyl phenol; ethoxylated, propoxylated or co-ethoxylated/propoxylated mono-, di- or tri-styrylphenol (tri-(1-phenylethyl)phenol), optionally substituted by one, two, three or four $C_{1-15}$-alkyl groups; ethoxylated, propoxylated or co-ethoxylated/propoxylated naphthol or mono-, di- or tri-styrylnaphthol, optionally substituted by one, two, three or four $C_{1-15}$-alkyl groups; ethoxylated, propoxylated or co-ethoxylated/propoxylated mono- or dicyclohexylphenol or mono-, di- or tri-styryl substituted mono- or di-cyclohexylphenol, optionally further substituted by one, two, three or four $C_{1-15}$-alkyl groups; ethoxylated, propoxylated or co-ethoxylated/propoxylated phenylphenol or mono-, di-or tristyryl phenylphenol, optionally substituted by one, two, three or four $C_{1-15}$-alkyl groups; ethoxylated, propoxylated or co-ethoxylated/propoxylated mono-, di- or tri-benzylphenol, optionally substituted by one, two, three or four $C_{1-15}$-alkyl groups; ethoxylated, propoxylated or co-ethoxylated/propoxylated mono-, di- or tri-benzyl phenylphenol, optionally substituted by one, two, three or four alkyl groups; ethoxylated, propoxylated or co-ethoxylated/propoxylated formalin condensed phenol or naphthol, preferably consisting of maximally 8 phenol-/naphthol-units, and which optionally per aromatic core may be substituted by one, two or three alkyl groups; ethoxylated, propoxylated or co-ethoxylated/propoxylated $C_{8-30}$-hydrocarbyl alcohol, preferably $C_{9-22}$-hydrocarbyl alcohol, which further may optionally be methylated in the terminal OH-group of the polyalkoxylene; mono-carboxylic acid esters of polyethylene glycol, polypropylene glycol and co-polymerized polyglycols of ethylene glycol (ethylene oxide) and propylene glycol (propylene oxide), in which it applies to all three types of polyglycol that the number of alkoxy-units must be at least 4, and a $C_{8-30}$-hydrocarbyl carboxylic acid, preferably a $C_{10-22}$-hydrocarbyl carboxylic acid; dicarboxylic acid esters of polyethylene glycol, polypropylene glycol and copolymerized polyglycols of ethylene glycol (ethylene oxide) and propylene glycol (propylene oxide), in which it applies to all three types of polyglycol that the number of alkoxy-units must be at least 6, and two mutually independent $C_{8-30}$-hydrocarbyl carboxylic acids, preferably two $C_{10-22}$-hydrocarbyl carboxylic acids which may, however, very well be identical; block polymers (copolymerisates) of ethylene oxide and styrene and of ethylene glycol (ethylene oxide) and propylene glycol (propylene oxide) the molecular weight of which is in the interval from 1000 to approximately 20.000 Dalton, preferably from 1800 to 16.000 Dalton.

Other preferred non-ionic emulsifiers are those selected among ethoxylated or co-ethoxylated/propoxylated vegetable oils, e.g. castor oil; fatty acid esters of polyalcohol, e.g. sorbitol, which per se is an emulsifier but which may also further be alkoxylated (ethoxylated, propoxylated or coethoxylated/propoxylated); monoglyceride, diglyceride and polyalcoholate of natural fatty acid which may be further esterified with $C_{1-4}$-monocarboxylic acid (e.g. acetic acid), $C_{1-10}$-dicarboxylic acid (e.g. adipic acid) and $C_{1-6}$-hydroxycarboxylic acid (e.g. lactic acid) and which may further be alkoxylated. Further preferred non-ionic emulsifiers are those selected among N-$C_{4-16}$-alkyl-pyrrolidone, in particular N-$C_{8-16}$-alkylpyrrolidone, hydrocarbyl carboxylic amide and alkoxylated variants thereof; hydrocarbyl sulfonamide and alkoxylated variants thereof; alkoxylated hydrocarbyl mercaptane, alkoxylated thiophenol and alkoxylated thionaphthol. Further relevant non-ionic emulsifiers are those selected among ethoxylated or co-ethoxylated/propoxylated $C_{8-30}$-hydrocarbyl amine, preferably $C_{8-22}$-hydrocarbyl amine having at least 5 alkoxy groups, in particular with 5 to 15 ethoxy groups.

It applies to the non-ionic emulsifiers that all co-ethoxylated/propoxylated emulsifiers have a molecular weight up to 20.000 Dalton, preferably up to 16.000 Dalton and in particular up to 12.000 Dalton.

Emulsifiers that are solely ethoxylated preferably have a HLB-value of no more than 14, preferably of no more than 13, in particular of no more than 12 and especially of no more than 11, and simultaneously of at least 3, preferably of at least 4, in particular of at least 5 and especially of at least 6, e.g. in the interval of 3 to 14, preferably in the interval of 4 to 13, in particular of 5 to 12 and especially from 6 to 11 (HLB = Hydrophilic-Lipophilic-Balance; HLB-values are theoretically calculated values used in connection with ethoxylated, non-ionic emulsifiers. The HLB-value is directly proportional to the content of oxyethylene. HLB-values range between 0 and 20; a low HLB-value indicates an oil soluble emulsifier and the water solubility increases with the HLB-value.

Examples of ionic emulsifiers that are cationic are $C_8$-$C_{30}$-hydrocarbyl amine, $C_8$-$C_{30}$-hydrocarbyl-di- and -triamine, hydrocarbylene-di-amine and ethoxylated, propoxylated or co-ethoxylated/propoxylated $C_{8-30}$-hydrocarbyl amine with no more than 4 alkoxy groups. Other relevant cationic emulsifiers are quaternary amines with at least one group of $C_{8-30}$ hydrocarbyl- and/or hydrocarbylene.

Another type of ionic emulsifiers is amphoteric emulsifiers,characterized by containing at least one group of $C_{8-30}$-hydrocarbyl, preferably a $C_{10-22}$-hydrocarbyl group or at least one group of $C_{8-30}$-hydrocarbylene, preferably a $C_{10-22}$-hydrocarbylene group and in any case at least one amino group and further an anionic group. The anionic group must preferably be selected among carboxylic acid, sulfonic acid and phosphonic acid.

Particularly preferred emulsifier components are those in which the emulsifier component consists of a mixture of a number of non-ionic emulsifiers and a number of anionic emulsifiers. It appears from the above referenced patent applications EP-A2-142670 and EP-A1-243872 that the preferred anionic emulsifier pertains to the phosphate ester type, that is characterized by being extremely effective. It appears from the various examples that the phosphate ester

emulsifier always form part of the recipes in larger amounts. The lowest applied quantity of phosphate ester emulsifier is in Example 7, II, in EP-A2-142670. The phosphate ester is reacted with mono ethanol amine to form a salt and constitutes on the basis of weight about 5% of the total composition. It should further be observed that the composition is based on another type of oily component than those preferred in the present application and that the composition described in Example 7, II, is difficultly emulsifiable and furthermore has a limited storage stability.

The inconvenience of the phosphate ester emulsifiers is that they may form calcium salts with the calcareous content in the diluting water. In order to obtain a slighter sensitivity to calcium the phosphate ester emulsifiers in the previously described formulations of the above referenced applications have been used in larger quantities, up to about 15% on the basis of weight of the total composition. For other reasons a high phosphate ester content may be inadvantageous. As mentioned in the opening portion of the present specification this might be due to problems related to tank mixing reduce the possibility of tank mixing with other emulsifiable pesticide preparations. Another inconvenience consists in that the phosphate esters are good solvents and that the phosphate ester emulsifier content to a small extent may dissolve the finely ground herbicide, thereby providing crystal growth in the preparation.

It has turned out that an alternative manner of eliminating precipitation is to keep the phosphate ester emulsifier content low so as to limit or totally avoid calcium containing salt deposits. Advantageous emulsifier components are therefore those in which the anionic moiety consists of various types all of which are ingredients in restricted amounts.

Very advantageous compositions are those in which the anionic emulsifiers and optionally other stabilizers as aromatic acid stabilizers wholly or partly are selected from the following types marked a, b, c, d, e, f, g, h and i:

a Phosphate ester emulsifiers preferably selected among those containing at least one aliphatic $C_{8-40}$-hydrocarbyl group, preferably a $C_{10-30}$-hydrocarbyl group, or an aliphatic $C_{8-40}$-hydrocarbylene group, preferably a $C_{10-30}$-hydrocarbylene group, or a monovalent or divalent, straight-chained or branched, wholly or partly aromatic hydrocarbon group having 8 to 40 carbon atoms, preferably 10 to 30 carbon atoms, and in which the emulsifier contains at least one phosphate ester group, that is di- or monoesterified so as to concurrently provide one or two acid groups that may either be free or be wholly or partly converted to salt. Moreover, the hydrocarbon group(s) (hydrocarbylene group(s)) of the phosphate ester emulsifier must be substituted by at least one -OH group preferably alkoxylated (ethoxylated or co-ethoxylated/-propoxylated), and in which the alkoxy group via the terminating -OH group forms part of the phosphate ester group. Preferred types of phosphate ester emulsifiers are mono- and diesters of phosphoric acid and of ethoxylated, propoxylated or co-ethoxylated/propoxylated mono-, di- or trialkylphenol, and of phosphoric acid and of ethoxylated, propoxylated or coethoxylated/propoxylated mono-, di- or tristyrylphenol (tri-1-phenylethyl)phenol), optionally substituted by one, two, three or four alkyl groups, and of phosphoric acid and alkoxylated styrylnaphthol, alkoxylated dicyclohexylphenol or alkoxylated benzylphenol, and of phosphoric acid and ethoxylated, propoxylated or co-ethoxylated/ propoxylated $C_{8-30}$-hydrocarbyl alcohol, preferably $C_{10-22}$-hydrocarbyl alcohol and of phosphoric acid and non-alkoxylated $C_{8-22}$-hydrocarbyl alcohol, preferably $C_{10-18}$-hydrocarbyl alcohol. The number of alkoxy groups of the phosphate ester must not exceed 40 oxyalkylene units, preferably not exceed 25 oxyalkylene units.

b Sulfonic acids, preferably selected among benzene sulfonic acid, substituted by one, two or three $C_{1-30}$-alkyl- and/or $C_{2-30}$-alkenyl groups, or benzene sulfonic acid, preferably substituted by one, two or three $C_{4-16}$-alkyl- and/or $C_{4-16}$-alkenyl-groups, or selected among $C_{8-50}$-alkyl sulfonic acid, $C_{8-50}$-alkenyl sulfonic acid or $C_{8-50}$-chloroalkyl sulfonic acid, preferably $C_{8-30}$-alkyl sulfonic acid, $C_{8-30}$-alkenyl sulfonic acid or $C_{8-30}$-chloroalkyl sulfonic acid, in particular $C_{10-22}$-alkyl sulfonic acid, $C_{10-22}$-alkenyl sulfonic acid or $C_{10-22}$-chloroalkyl sulfonic acid, or selected among non-naphthalene-containing petroleum or oil with a carbon chain length of 8 to 60 atoms, preferably 10 to 40 atoms that are mono-, di- or tri-sulfonated, and in which all of the sulfonic acid groups are available as a free acid or are wholly or partly converted to salt.

c Esters or semi-esters of sulfosuccinic acid (sulfosuccinate) wherein the sulfonic acid group and optionally one of the carboxylic acid groups arc available as free acid or are wholly or partly neutralized as salt, and wherein one or both carboxylic acid groups are esterified. The alcohol used in the esterification may be selected among $C_{8-30}$ hydrocarbyl alcohols, in particular a $C_{10-22}$ hydrocarbyl alcohol; phenol substituted by one, two or three $C_{2-30}$-alkyl and/or alkylene groups; benzyl alcohol, optionally substituted by alkyl, (poly)phenylphenol, inter alia tristyrylphenol, wherein each aromatic-ring may be substituted by one, two or three $C_{2-30}$-alkyl- and/or alkenyl groups; or formalin condensed phenol having up to 8 groups of formalin per molecule, and wherein each phenol ring may be substituted by one, two or three $C_{2-30}$-alkyl- and/or alkylene groups, and wherein preferably each phenol group is esterified with sulfosuccinic acid. Particularly preferred sulfosuccinic esters are those in which the above mentioned alcohols or phenols are at first alkoxylated with 1 to 40 oxyalkylene units, e.g. 1 to 40 oxyethylene units, 1 to 40 oxypropylene units or a combination of in total 1 to 40 oxyethylene units and oxypropylene units.

d Mono-sulfate ester derivatives preferably selected among mono-sulfate esters of $C_{8-20}$-alkyl alcohol or $C_{8-20}$-alkenyl alcohol either non-ethoxylated or ethoxylated with 1 to 8 oxyalkylene units, e.g. 1 to 8 oxyethylene units; and selected among monosulfate esters of phenylpolyalkylene glycolether alcohol, substituted by one, two or three $C_{2-30}$-alkyl- and/or alkenyl groups, and wherein the group of polyalkylene glycolether is constituted by 2 to 40 oxyalkylene units, preferably mono-sulfate esters of phenylpolyethylene glycolether alcohol, substituted by one, two or three $C_{2-30}$-alkyl and/or alkenyl groups, and wherein the polyethylene glycol group is constituted by 2 to 40 oxyethylene units; and selected among mono-sulfate esters of benzyl-substituted poly-alkylene glycolether alcohol or polyphenyl polyalkylene glycolether alcohol and alkylated derivatives thereof, such as mono-sulfate ester of tristyrylphenol polyethylene glycolether, wherein each aromatic ring may be substituted by one, two or three $C_{1-30}$-alkyl- and/or alkenyl groups, and wherein the polyethylene glycol group is composed of 2 to 40 oxyethylene units, and wherein all of the mono-sulfate esters are available as free acid or are wholly or partly converted to salt.

e Naphthalene sulfonic acid derivatives preferably selected among naphthalene sulfonic acid, optionally substituted by one, two or three $C_{1-12}$-alkyl- and/or $C_{2-12}$-alkenyl groups, and which are available as free acid or wholly or partly converted to salt, and corresponding naphthalene sulfonic acid that is formalin condensed.

f Sulfonated carboxylic acid derivatives, preferably selected among straight-chained or branched, saturated or unsaturated $C_{8-30}$-hydrocarbyl carboxylic acid substituted by one or two sulfonic acid groups, or mono-, di-, or triglycerides of the same sulfonated carboxylic acids available as free acid or which are wholly or partly converted to salt.

g Aliphatic $C_{8-30}$-hydrocarbylene-dicarboxylic acids, preferably $C_{10-20}$-hydrocarbylene dicarboxylic acid and aliphatic, chloro-substituted, $C_{8-30}$-hydrocarbylene-dicarboxylic acid, preferably chloro-substituted $C_{10-22}$-hydrocarbylene-dicarboxylic acid.

$C_{4-20}$-alkyl- or $C_{4-20}$-alkenyl substituted, straight-chained or branched, saturated or unsaturated $C_{1-10}$-hydrocarbylene-dicarboxylic acid is particularly preferred, and straight-chained or branched $C_{8-16}$-alkyl-or $C_{8-16}$-alkenyl succinic acid is extremely preferred, e.g. straight-chained or branched dodecyl or dodecenyl succinic acid. The dicarboxylic acids may preferably be available as acid or may wholly or partly be converted to salt.

h Polycarboxylic acids preferably prepared by polymerization or copolymerization, and which are polymerized from at least one of the following group of monomers consisting of acrylic acid, $C_{1-15}$-alkylacrylic acid, maleic acid, maleic acid anhydride, mono- or di-$C_{1-15}$-alkyl maleic acid and mono- or di-$C_{1-15}$-alkyl maleic acid anhydride, and wherein the remaining monomers optionally may be selected from the group consisting of vinyl pyrrolidone and ethylene, the latter one of which is either substituted by a straight-chained or branched, aliphatic $C_{1-20}$ alkyl or a wholly or partly aromatic hydrocarbon group with 6 to 20 carbon atoms, and wherein the molecular weight of the polymer/copolymer is in the interval from 1,000 to 50,000 Dalton, rather in the interval from 2,000 to 20,000 Dalton, preferably in the interval from 3,000 to 10,000 Dalton, and in particular in the interval from 5,000 to 8,000 Dalton, and wherein the polycarboxylic acid may be available as a free acid or may be wholly or partly converted to salt, and/or may optionally be partially esterified with polyalkylene glycol, e.g. polyethylene glycol and/or polypropylene glycol, the polyalkylene glycol being moreover methylated in the terminating OH-gruppe.

(The chemical stability increases, provided the composition further contains an acid, organic or inorganic, retaining the pH in the interval 3 to 5. The acid may be partially neutralized to salt. It has turned out that a group of aromatic carboxylic acids besides acting as buffers may stabilize the emulsion when the composition is diluted in water and prevent the formation of sticky precipitations. Said group of aromatic acid stabilizers or the salts thereof do not per se need to be emulsifiers or their salts do not need per se to be emulsifiers and are described under item i).

i Benzoic acid, hydroxybenzoic acid, dihydroxybenzoic acid, mono-, di- or tri-$C_{1-6}$-hydrocarbyl-benzoic acid, mono-, di- or tri-$C_{1-6}$-hydrocarbyl-hydroxybenzoic acid, mono-, di- or tri-$C_{1-6}$-hydrocarbyldihydroxybenzoic acid, benzene dicarboxylic acid, benzene tricarboxylic acid, benzene tetracarboxylic acid, mono-, di- or tri-$C_{1-6}$-hydrocarbyl-benzene dicarboxylic acid, mono-, di- or tri-$C_{1-6}$-hydrocarbyl-benzene tricarboxylic acid or mono-, di- or tri-$C_{1-6}$-hydrocarbylbenzene tetracarboxylic acid, in which the acids may be available as free acid or may be wholly or partly converted to salt.

Preferred salts of the acids mentioned under items a to i are monovalent salts, e.g. salts of sodium, potassium, lithium, ammonium, lower alkylamine, lower alkylalkanol amine and alkanol amine, preferably those having no more than 7 carbon atoms, in particular no more than 6 carbon atoms. Examples of the latter are methyl amine, ethyl amine, propyl amine, dimethyl amine, diethyl amine, diethylethanol amine, monoethanol amine, diethanol amine, triethanol amine and isopropanol amine.

Advantageous compositions are those containing one ore more phosphate esters, described above under item a, and in which the total amount of phosphate ester according to the specification constitutes from 0.03 to 4.4%, rather constitutes 0.05 to 3.8%, preferably constitutes from 0.07 to 3,0%, in particular constitutes 0.1 to 2,4% and especially constitutes from 0.14 to 1.8% on the basis of weight of the total composiition or, if it is actually a ready-to-use mixture diluted by the user, calculated on the basis of weight of the solids content of said mixture.

Other advantageous compositions are those containing one or more sulfonic acids as described above under item b, and wherein the total amount of sulfonic acid constitutes 0.03 to 4,4%, rather constitutes 0.05 to 3,8%, preferably constitutes 0.07 to 3.0%, in particular constitutes from 0.1 to 2,4%, and especially constitutes from 0.14 to 1.8% on the basis of weight of the total composition or, if it is actually a ready-to-use mixture diluted by the user, calculated on the basis of weight of the solids content of said mixture.

Other advantageous compositions are those containing one or more sulfosuccinic acids described above under item c, and in which the total quantity of sulfonic acid as specified amounts to 0.03 to 4.4%, rather amounts to 0,05 to 3,8%, preferably constitutes 0.07 to 3.0%, in particular amounts to 0.1 to 2.4%, and especially amounts to 0.14 to 1.8% on the basis of weight of the total composition or if it is a ready-to-use mixture diluted by the user, calculated on the weight basis of the solids content of said mixture.

Other advantageous compositions are those containing one or more $C_{8-30}$-hydrocarbylene-dicarboxylic acids and/or chloro-substituted $C_{8-30}$-hydrocarbylene dicarboxylic acids, as described under item g, and in which the total quantity of dicarboxylic acid as specified constitutes 0.03 to 4.4%, rather 0.05 to 3.8%, preferably constitutes 0.07 to 3.0%, particularly constitutes 0.1 to 2.4%, and especially constitutes 0.14 to 1.8% on the basis of weight of the total composition or, if it is a ready-to-use mixture diluted by the user, calculated on the basis of weight of the solids content of said mixture.

Other advantageous compositions are those containing one or more polycarboxylic acids as described under item h, and wherein the total quantity of polycarboxylic acid as specified constitutes 0.03 to 4.4%, rather constitutes 0.05 to 3.8%, preferably constitutes 0.07 to 3.0%, particularly constitutes 0.1 to 2.4%, and especially constitutes 0.14 to 1,8% on the basis of weight of the total composition or, if it is a ready-to-use mixture diluted by the user, calculated on the basis of weight of the solids content of said mixture.

Other advantageous compositions are those containing one or more aromatic acid stabilizers as described under item i, and in which the total quantity of acid stabilizer as specified amounts to 0.03 to 4.4%, rather amounts to 0.05 to 3.8%, preferably constitutes 0.07 to 3.0%, in particular amounts to 0.1 to 2.4%, and especially amounts to 0.14 to 1.8% on the basis of weight of the total composition or, if it is a ready-to-use mixture diluted by the user, calculated on the weight basis of the solids content of said mixture.

Other advantageous compositions are those containing at least one anionic emulsifier as defined above under items a, b, c, d, e, f, g, and h or an acid stabilizer, as defined under item i, and in which the total quantity of emulsifier or acid stabilizer within each individual group constitutes 0.03 to 4,4%, rather 0.05 to 3.8%, preferably constitutes 0.07 to 3.0%, particularly constitutes 0.1 to 2.4%, and especially constitutes 0.14 to 1.8% on the basis of weight of the total composition or, if it is a ready-to-use mixture diluted by the user, calculated on the basis of weight of the solids content of said mixture.

More advantageous compositions are those containing at least two components selected each from their respective group and comprising the anionic emulsifier components as defined above under items a, b, c, d, e, f, g and h, and/or an acid stabilizer as defined under item i, and wherein the total quantity of emulsifier(s) and optionally acid stabilizer within each of said respective groups constitutes 0.03 to 4.4%, rather constitutes 0.05 to 3.8%, preferably constitutes 0.07 to 3.0%, particularly constitutes 0.1 to 2.4%, and especially constitutes 0.14 to 1,8% on the basis of weight of the total composition or, if it is a ready-to-use mixture diluted by the user, calculated on the basis of weight of the solids content of said mixture.

Other preferred compositions are those in which the total quantity of anionic emulsifier components as defined above under items a, b, c, d, e, f, g and h constitutes 0.03 to 4.4%, rather constitutes 0.05 to 3.8%, preferably constitutes 0.07 to 3.0%, particularly constitutes 0.1 to 2.4%, and especially constitutes 0.14 to 1,8%, all percentages being on the basis of weight of the total composition or, if it is a ready-to-use mixture diluted by the user, calculated on the basis of weight of the solids content of said mixture.

Other compositions are those in which the anionic emulsifiers are wholly or partly selected among lignin sulfate, N-acrylsarkoside and alkyl sulfamidocarboxylic acid.

Compositions stabilized in the moderately acidic pH-area with an acid component in which the acid component either as free acid or a partially neutralized salt is appropriate for stabilizing the composition due to its buffer effect are such compositions containing myristic acid, acetic acid, propionic acid, chloroacetic acid, chloropropionic acid, lactic acid, malic acid, tataric acid, citric acid, oxalic acid, boric acid and/or phosphoric acid.

Besides functioning as a buffer the oxalic acid may have a calcium-precipitating effect on the diluent water, thereby increasing the emulsifying stability in the calcareous water. Oxalic acid is therefore a particularly advantageous acid component.

It may be desirable to add to the composition one or more glycol components in an amount of 0.5 to 12% by weight, preferably in an amount of 1 to 8% by weight and especially in an amount of 1.5 to 6% by weight, calculated on the basis of weight of the total composition, and in which the glycol component may for instance be selected among ethylene glycol, propylene glycol, hexylene glycol, polyglycols, such as di-, tri- and tetraethylene glycol and di-, tri- and tetrapropylene glycol, glycolmethyl ether, glycolethyl ether, butylglycol, butyldiethylene glycol, propylene glycolmethyl ether, dipropylene glycol methyl ether and tripropylene glycol methyl ether. The glycol components may have a promoting effect on the emulsion stability of the diluted product, have a visosity modifying effect and prevent flocculation of the composition.

Other adjuvants which are for instance added to improve the low temperature resistance are inorganic salts, such as sodium chloride and potassium nitrate and amine salts, such as monoethanolamine hydrochloride and triethanolamine phosphate, preferably in amounts of 1 to 5% by weight.

In order to suppress the tendency to precipitate a compact pesticidal residue during the storage of the suspension it may be advantageous to add a filler. Examples of fillers are naturally available and synthetic types of clays and silicates.

The compositions are used in diluting with water to the use concentration which normally constitutes from 0.2 to 10% by weight, preferably 0.5 to 4% by weight, calculated on the final use mixture. The dosage quantities of the use mixtures of the diluted products normally constitute 20 to 500 l/ha, preferably 80 to 200 l/ha. The spraying is carried out in spring shortly after sprouting. General dosage quantities of the active substances per ha will for phenmedipham normally constitute 100 to 1.500 g, preferably 200 to 1.000 g, for ethofumesate 100 to 1.500 g, preferably 200 to 1.000 g and for metamitron 300 to 5.000 g/ha, preferably 500 to 3.000 g/ha.

It is also the diluted ready-to-use mixtures that present favourable properties. Said use mixtures may optionally by mixing be prepared by the user from a non-oily suspension preparation containing one, two or three of the active beet herbicides and an emulsifiable oil concentrate. The invention thus also includes ready-to-use mixtures diluted by the user and in which the ingredients of the composition in this situation are calculated on the basis of the solids content of said mixture, wherein only such components are included, as also stated above, which are either solids or have a boiling point at 760 mm Hg at more than 210°C, so that solvents having a boiling point below 210°C are not taken into account when calculating the solids content.

Preferred herbicidal ready-to-use dilutions diluted by the user are such herbicidal ready-to-use dilutions in which the herbicidal component is suspended in fine-grained form in an aqueous phase containing oil and in which the aqueous phase further contains at least one component selected from the group af beet herbicides consisting of phenmedipham (methyl-(3-(tolylcarbamoyloxy)phenyl)carbamate), ethofumesate ((±)-2-ethoxy-2,3-dihydro-3,3-dimethylbenzofuran 5-yl, methansulfonate) and metamitron (4-amino-4,5-dihydro-3-methyl-6-phenyl-1,2,4-triazine-5-on), so that the total quantity of herbicide amounts to 0.1 to 4% by weight, preferably 0.15 to 3% by weight and in particular 0.2 to 2% by weight, and wherein the aqueous phase contains one or more emulsified, solubilized or diluted oils with an initial boiling point at least at 210°C selected among mineral oils, triglyceride ester oils and ester oils with one or two ester groups per molecule and having from 8 to 72 carbon atoms per molecule, and whose solubility in water at 20°C does not exceed 3% by weight, preferably does not exceed 2% by weight and especially does not exceed 1% by weight, so that the total oil content of the defined oil components constitutes from 0.1 to 4% by weight, preferably from 0.15 to 3% by weight, in particular from 0.2 to 2% by weight and especially from 0.3 to 1.5% by weight, and wherein the herbicidal ready-to-use dilutions contain one or more emulsifiers in an amount of from 0.01 to 2% by weight, preferably from 0.015 to 1.5% by weight, in particular from 0.02 to 1% by weight and especially from 0.03 to 0.5% by weight, said herbicidal compositions being characterized by containing from 0.0005 to 0.8% by weight, preferably from 0.001 to 0.4% by weight, in particular from 0.002 to 0.1% by weight and especially from 0.003 to 0.04% by weight of at least one polymer which at 60°C is a solid substance and which preferably through a dilatation at 20°C is stably dilutable/soluble in water and which at the same time has a molecular weight of at least 7.000 Dalton, in that said polymer neither comprises polycarboxylates nor co-polymers of oxyethylene and oxypropylene with at least 80% by weight of polyoxyethylene and polyoxypropylene, or hydrophilic biopolymers, for which the polymerization has been carried out by an industrially controlled fermentation process and wherein, moreover, the preferred polymers are further defined in accordance with the claims 10 to 16, all the stated percentages for the composition being calculated on the weight of the total ready-to-use solution.

In the above herbicidal use mixtures the solubility of phenmedipham in the included oils should preferably not exceed 3% by weight, in particular not exceed 2% by weight and especially not exceed 1% by weight.

List of Used Components.

1) Viscosity 15 cSt at 40°C, carbon distribution according to ASTM D2140:
$C_A$ (aromatic carbon) = 1%
$C_N$ (naphthenic carbon) = 45%
$C_P$ (paraffinic carbon) = 54%.
Aniline point: 90°C.

2) Solvent-refined paraffin oil (Norsk Hydro), Viscosity at 40°C: 20 cSt.
Carbon distribution according to ASTM D2140:
$C_A$ = 4%, $C_N$ = 30%, $C_P$ = 66%.
Aniline point: 95°C.

3) Solvent-refined paraffin oil (Shell), Viscosity at 40°C: 27 cSt.
Carbon distribution according to ASTM D 2140:
$C_A$ = 5%, $C_N$ = 33 %, $C_P$ = 62%.
Aniline point: 99°C.

4) High-boiling petroleum, flash point 65 to 70°C.

5) Ethoxylated dinonyl phenol (9 oxyethylene units per molecule) (Berol).

6) Ethoxylated nonyl phenol (4 oxyethylene units per molecule) (Berol).

7) Co-ethoxylated/propoxylated fatty alcohol (Hoechst).

8) Ethoxylated coconut alkyl amine (10 oxyethylene units per molecule) (Hoechst).

9) 70% solution of coconut-alkyl-β-aminopropanoic acid in an alcoholic mixture (Kenogard).

10) 64% Sodium-oleyl-N-methyl-tauride (Hoechst).

11) Attapulgite clay (Chemie Mineralien G.M.B.H.).

12) Hydro-treated naphtenic oil from Shell, viscosity at 20°C: 22 cSt. Carbon distribution according to ASTM D 2140: $C_A$ = 12%, $C_N$ = 43 %, $C_P$ = 45%.
Aniline point 71°C.

13) Technical 2-ethylhexyl oleate (Oleofina).

14) Technical 2-ethylhexyl stearate (Oleofina).

15) Ethoxylated nonylphenol (6 oxyethylene units per molecule) (Berol).

16) Ethoxylated nonylphenol (8 oxyethylene units per molecule) (ICI)

17) Co-ethoxylated/-propoxylated nonylphenol (Berol).

18) Ethoxylated castor oil (40 oxyethylene units per molecule) (Hoechst).

19) Polyethoxylated triglyceride (HLB = 14,4)(ICI).

20) Dodecenyl succinic acid anhydride from BP. Converted in all recipes to salt by reaction with base, e.g. monoethanol amine in the presence of water.

21) Mixture of alkylnaphthalene sulfonates (DeSoto).

22) Acidic phosphoric ester of ethoxylated alkyl phenol (Berol).

23) Acidic phosphoric ester of ethoxylated alkyl phenol (GAF).

24) Acidic phosphoric ester of ethoxylated alkyl phenol (GAF).

25) Sodium salt of copolymerised 2,4,4-trimethyl-1-penten and maleic acid anhydride (molecular weight: 5.000-7.000 Dalton) (Rhône-Poulenc).

26) Technical dodecylbenzene sulfonic acid (Berol).

27) 40% sodium polyacrylate (molecular weight: 3.000-8.000 Dalton) (Protex).

28) $C_{12-18}$-alkyl sulfonate, 60% (Hoechst).

29) Polyvinyl alcohol, degree of hydrolysis: appr. 83%, viscosity of 4% solution at 20°C: appr. 3 cP (mPa · s), estimated molecular weight appr. 20.000 Dalton (Hoechst).

30) Polyvinyl alcohol, degree of hydrolysis: appr. 73%, viscosity of 4% solution at 20°C:

appr. 10 cP, estimated molecular weight: appr. 68.000 Dalton (Hoechst).

31) Polyvinyl alcohol, degree of hydrolysis: appr. 80%, viscosity of 4% solution at 20°C: appr. 4 cP, estimated molecular weight: appr. 27.000 Dalton (Hoechst).

32) Polyvinyl alcohol, degree of hydrolysis: appr. 98,5%, viscosity of 4% solution at 20°C: appr. 3 cP, estimated molecular weight: appr. 15.000 Dalton (Hoechst).

33) Polyvinyl alcohol, degree of hydrolysis: appr. 88%, viscosity of 4% solution at 20°C: appr. 40 cP, estimated molecular weight: appr. 120.000 Dalton (Hoechst).

34) Cetyl ether of hydroxyethyl cellulose (Aqualon)

35) (Poly)hydroxyethyl cellulose, viscosity of 1% solution in water at 20°C: appr. 2000 to 2500 cP (Aqualon).

36) Low-viscous methyl cellulose, molecular weight: appr. 13.000 to 15.000 Dalton, viscosity of 2% solution in water: appr. 15 cP (DOW).

37) Low-viscous (poly)hydroxypropyl methyl cellulose, viscosity of 2% solution in water: appr. 450 cP, (Courtaulds Chemicals & Plastics).

38) Methyl-cellulose, viscosity of 2% solution in water: appr. 450 cP (DOW).

39) Partially ethoxylated copolymerisate of $C_{12-14}$-alkylethylene/maleic acid (maleic acid-anhydride), molecular weight: appr. 20.000 Dalton (Akzo).

40) Ethoxylated castor oil (appr. 90 oxyethylene units per molecule) (Berol).

41) Technical propylene glycol dioleate (Oleofina)

42) Technical ricinoleic acid (Oleofina).

43) Hydrophobic-modified (poly)hydroxyethyl cellulose (Berol).

44) Phosphate ester triethanol amine salt of tristyryl-phenolpoly(15)oxyethylene alcohol (Rhône-Poulenc).

45) 40% Lauryl alcohol polyoxyethylene alcohol sulfonated succinic acid ester salt (monoester) (Rhône-Poulenc).

46) Kerosene, boiling point 190 to 205°C, aromatic content <0,1%.

47) 70% sodium lauryl-trioxyethylene alcohol sulfate (Albright of Wilson).

48) Formalin-condensed naphthalenesulfonic acid: Na-salt (84%) (Harcros).

49) Fatty acid sulfonate neutralized to salt (Harcros).

50) 62% Petroleum sulfonate with an average molecular weight of 520 Dalton (Witco).

51) Polyphenol ether sulfate (Berol).

52) Tristyrylphenol poly(15)oxyethylene alcohol sulfate (Harcros).

53) 2-Ethylhexyl sebacate (diester).

54) Dioleic acid ester of polyethylene glycol (M=200 Dalton) containing 2% free oleic acid (KVK AGRO).

55) Technical n-butyl oleate (Oleofina).

56) Ethoxylated nonyl phenol (10 oxyethylene units per molecule) (Berol).

57) Ethoxylated branched $C_{9-11}$-alkyl alcohol (5-oxyethylene units per molecule) (Berol).

58) Ethoxylated branched $C_{9-11}$-alkyl alcohol (7 oxyethylene units per molecule) (Berol).

59) Ethoxylated castor oil (18 oxyethylene units per molecule) (Berol).

60) Acidic phosphoric ester of ethoxylated alkyl alcohol (Harcros).

61) Water-soluble vinylpyrrolidone/vinylacetate copolymer in a molar ratio of 60/40 (GAF).

62) Water-soluble alkylated vinylpyrrolidone polymer (GAF).

63) Sodium sulfosuccinic acid octyl ester (Cyanamide).

Concurrently with the present patent application an equivalent patent application is filed, relating to oily suspension concentrates containing PMP, ethofumesate and/or metamitron, in which the examples primarily show the definition of the used oils. The examples illustrated in the parallel application may be used as a supplement to the present application. In order to facilitate the clearness the same list of chemicals has been used with the same numbering in the two applications. On the other hand the lists of chemicals may include chemicals that do not form part of the examples described in the application concerned.

Example 1

The examples show a biological screening comparison test carried out as field experiments between 160 g/l oil-containing PMP-suspension concentrates with only 4% emulsifier, and the oil-containing suspension concentrate actually marketed by Schering, marketed under the trade name Betanal+ containing 16% PMP and 19% emulsifier. (Experience as regards emulsion preparations in which the PMP is dissolved in the oily phase shows that a specific quantity of the emulsifier component is necessary to obtain a sufficiently good biological effect (cf. SE patent publication No. 357,486). The optimum quantity of emulsifier amounts to appr. 20% by weight, corresponding to what is normal in all commercial preparations.

The compositions 1b, 1c, 1d and 1e were prepared by firstly admixing the PMP in the oily phase and subsequently adding the emulsifier components and water obtained as a pre-mixing by mixing at first water + monoethanol amine and DDSA. The remaining ionic emulsifiers are then added and finally the non-ionic emulsifiers in the indicated order. Formic acid and Attagel are subsequently added. The grinding was effected three times on a 0.6 l Dyno-mill at a circumferential velocity of appr. 10 m/sec. and at a dosing velocity of appr. 3 l/h, or until appr. 90% of the particles had a grain size not exceeding 5μ.

As regards samples 1d and 1e a post-grinding was performed after adding oxalic acid, monoethanol amine salt and oxalic acid-K-salt which was not completely converted to salt. The purpose of the additions is to prevent calcium from the diluting water from reacting with the anionic emulsifiers and forming hardly soluble Ca-salts. The oxalic acid salts react with the calcium ions in the water and form hardly soluble calcium oxalate. This contributes to improving the longlife emulsion stability in hard water.

The biological testing was effected in lots of 2 x 12 meter with 4 repetitions. In experiment 9032 the beet type was Amethyst sown on 31 March 1990, and in experiment 9033 the beet type was Matador sown on 8 April 1990. In experiment 9032 the beets were sprayed first time on 2 May and second time on 8 May. In experiment 9033 the beets were sprayed first time on 1 May and second time on 9 May. All dosages were of 3 l/ha. A non-treated lot and lots treated completely as the experimental lots were included as reference, treated with Betanal (160 g/l PMP-containing emulsion concentrate) and Betanal+ (160 g/l PMP-containing suspension concentrate). Experiment 2a indicates the summed recipe of Betanal+. Recipe compositions of Betanal are not included in the scheme, the formulation type being totally different.

The biological effect in % is calculated according to the following formula:

$$100 \times \frac{\text{g weed per m}^2 \text{ of treated lot}}{\text{g weed per m}^2 \text{ of untreated lot}}$$

The quantity of weed of the untreated lot is stated uttermost to the left in the scheme.

In both experiments Betanal and Betanal+ had the same biological effect, so that column 1a states both the biological effect of Betanal as well as of Betanal+.

Conclusion: Even though there have been great differences in the content of emulsifiers of the preparations, all of the preparations have presented a satisfactory biological effect.

The presence of polymeric stabilizers have contributed to allowing for reducing the emulsifier content to the described rather low contents without deteriorating the emulsion stability.

Table 1

| Raw material Component | 1a | 1b | 1c | 1d | 1e |
|---|---|---|---|---|---|
| | Composition in % by weight | | | | |
| Active component: | | | | | |
| PMP, tekn 97 % | | 17.0 | 17.0 | 16.3 | 16.3 |
| Oil: | | | | | |
| Gravex 921 12) | | | | 64.2 | 64.2 |
| Isononanoic acid | | 6.5 | 6.5 | 5.2 | 5.2 |
| Oleic acid | | 2.0 | 2.0 | 1.9 | 1.9 |
| Radia 7331 13) | | | 66.5 | | |
| Radia 7131 14) | | 66.4 | | | |
| Emusifier component: | | | | | |
| Berol 02 15) | | 1.1 | 1.0 | 0.5 | 0.5 |
| Berol 269 5) | | 0.2 | 0.2 | 0.1 | 0.1 |
| Berol 26 6) | | 0.1 | | | |
| Synperronic NX 16) | | | 0.2 | 0.4 | 0.4 |
| Berol 922 17) | | 0.5 | 0.5 | 0.3 | 0.3 |
| Emulsogen EL 18) | | 0.15 | 0.15 | 0.1 | 0.1 |
| Atlox 1285 19) | | | | 0.2 | 0.2 |
| DDSA 20) | | 0.3 | 0.3 | 0.3 | 0.3 |
| Morwet EFW 21) | | | | 0.2 | 0.2 |
| Berol 724 22) | | 0.6 | 0.6 | 0.55 | 0.55 |
| Gafac RE 410 23) | | 0.6 | 0.6 | 0.65 | 0.65 |
| Gafac RE 610 24) | | 0.2 | 0.2 | 0.1 | 0.1 |
| Tarryn P 126 25) | | 0.2 | 0.1 | | |
| Monoethanolamin | | 0.25 | 0.25 | 0.2 | 0.2 |
| Polymer stabilizer: | | | | | |
| Mowiol 3/83 29) | | 0.3 | 0.3 | 0.3 | 0.3 |

Table 1 (continued)

| Raw material | 1a | 1b | 1c | 1d | 1e |
|---|---|---|---|---|---|
| Component | Composition in % by weight | | | | |
| Water, acid and filler: | | | | | |
| Attagel 40 [11] | | 2.0 | 2.0 | 1.4 | 1.4 |
| Formic acid | | 0.4 | 0.4 | 0.2 | 0.2 |
| Oxalic acid MEA-salt | | | | 6.0 | |
| Oxalic acid-K-salt | | | | | 6.0 |
| Water | | 12 | 12 | 9 | 9 |
| **Summed recipe:** | | | | | |
| Active content, 97% | 17.5 | 17 | 17 | 16.3 | 16.3 |
| Oil | 58 | 74.9 | 75 | 71.3 | 71.3 |
| Emulsifier comp. | 19 | 4.2 | 4.1 | 3.6 | 3.6 |
| Polymer stabilizer | | 0.3 | 0.3 | 0.3 | 0.3 |
| Water, acid and filler | 5.5 | 3.6 | 3.6 | 8.5 | 8.5 |
| Density | 0.96 | 0.98 | 0.98 | 0.97 | 0.97 |
| pH (1:10) | 3.0 | 3.05 | 3.15 | 2.9 | 3.1 |
| Dosage l/ha | 3 | 3 | 3 | 3 | 3 |
| g PMP/ha. | 480 | 485 | 485 | 460 | 460 |
| % biological effect: | | | | | |
| Experiment 9032 | | | | | |
| Effect: | 100% | 100% | 100% | 99% | 99% |
| (untreated: 2828 $g/m^2$) | | | | | |
| Experiment 9033 | | | | | |
| Effect: | 99% | 100% | 100% | 98% | 99% |
| (untreated: 2102 $g/cm^2$) | | | | | |

Example 2

The examples show comparison testing between Betanal+ (charge No. 902), sample 2a and a composition, sample 2b, described in accordance with this invention.

The composition 2b is obtained by preparing at first a 50% aqueous dispersion of PMP in water. The aqueous PMP-slurry further contained 1.25% of Berol 02, 0.625% of Berol 922 and 0.625% of Berol 724. After mixing to obtain sample 2b it corresponds to 4 g/l, 2 g/l and 2 g/l, respectively. The grinding was effected three times on a 0.6 l Dyno-mill at a circumferential velocity of appr. 10 m/sec. and at a dosing velocity of appr. 3 l/h, or until at least 90% of the particles had a grain size not exceeding 5 µ. The salicylic acid was subsequently dissolved in Radia 7131. The remaining oils were added and mixing was effected. A little water and the emulsifiers which had not been used for the preparation of the PMP-suspension were then mixed and subsequently added to the oil mixture, and agitation was effected. Then the ground PMP-suspension was added, Mowiol was added as a 30% solution and finally the remaining amount of water and Attagel was added.

The composition 2b was thoroughly stirred on a high-speed-mixer, and a final, not particularly effective grinding on a "Mini-mill" was effected, manufactured by Eiger Engineering LTD Warrington, Cheshire, England, Model M 50 VSE TFV, filled with appr. 35 ml 1 mm Zirconium balls. The purpose of the grinding was primarily to split agglomerated Attagel.

Betanal+ (charge nr. 302) was used as reference 2a-I. Since the product was comparatively coarse-grained, a sample of Betanal+ was ground on a 0.6 l Dyno-mill, so that the grain size of the larger particles was reduced from about 20µ to 5µ corresponding to sample 3b. This sample was named 2a-II.

The storing experiments were carried out for a period of 40 days, during which the samples were alternately stored at room temperature (25°C) and at 55°C. The switching was effected manually every day and no samples were switched at week-ends. The measurings of the particle size were effected on evaluation by micro-examination and appear from the scheme. Sample No. 2b differed completely from samples 2a-I and 2a-II, which were not substantially different, even though the particle size of the samples initially had been very unequal. The accelerated testings correspond to a storage for several years under normal storing conditions and are much harder compared to what a product is generally subjected to.

Conclusion: Sample 2b was decisively better than samples 2a-I and 2a-II. The observed, restricted crystal growth in sample 2b does not appear to involve problems, neither as regards the storage stability nor the biological effect.

The presence of polymeric stabilizers have contributed to allowing for reducing the emulsifier content to the described rather low contents without deteriorating the emulsion stability. The low emulsifier content in 2b has been a contributory reason of the low crystal growth in this composition.

Table 2

| Raw material Component | 2a | 2b | |
|---|---|---|---|
| | Composition in % | | |
| Active component: | | | |
| PMP, techn. 97% | | 17.0 | |
| Oil: | | | |
| Gravex 921 [12)] | | 8.0 | |
| Radia 7131 [14)] | | 32.0 | |
| Isononanoic acid | | 4.2 | |
| Oleic acid | | 1.6 | |
| Emulsifier component: | | | |
| Berol 02 [15)] | | 1.5 | Non-ionic emuls. |
| Berol 922 [17)] | | 0.5 | Non-ionic emuls. |
| Emulsogen EL [18)] | | 0.1 | Non-ionic emuls. |
| DDSA [20)] | | 0.4 | Emuls. type g |
| Berol 724 [22)] | | 0.4 | Emuls. type a |
| Gafac RE 410 [23)] | | 0.3 | Emuls. type a |
| Sulfosoft [26)] | | 0.2 | Emuls. type b |
| *Acrylon A11 [27)] | | 0.4 | Emuls. type h |
| Monoethanol amine | | 0.2 | |
| Acid stabiliser: | | | |
| Salicylic acid | | 1.0 | Stabiliz. type i |
| Polymer stabilizer: | | | |
| Mowiol 3/83 [29)] | | 0.3 | |
| Water and filler: | | | |
| Water | | 30.4 | |
| Attagel | | 1.5 | |
| <u>Summed recipe</u>: | | | |
| Active content, 97% | 17.5 | 17.0 | |
| Oil | 58 | 45.8 | |
| Emulsifier component | 19 | 4.0 | |
| Acid stabilizer | | 1.0 | |
| Polymer stabilizer | | 0.3 | |
| Water, acid and filler | 5.5 | 31.9 | |

*Delivered as an aqueous solution, but stated on the basis of the solids content.

| Sample | 2a-I | 2a-II | 2b |
|---|---|---|---|
| pH (1:10) | 3.0 | 3.0 | 3,75 |
| Particle size | | | |
| Start: | | | |
| 90% < appr. | 20µ | 5µ | 5µ |
| Date | 30.8.90 | 30.8.90 | 30.8.90 |
| Particle size | | | |
| After 40 days alternately at 25°C/55°C | | | |
| 90% < appr. | 30µ | 30µ | 10µ |
| Fraction of very small particles | none | few | extremely many |
| Date | 9.10.90 | 9.10.90 | 9.10.90 |

Example 3

The Example illustrates the stability of ester oil in the described composition.

Sample 2b was stored for 42 days constantly at 55°C. The content of liberated 2-ethylhexyl alcohol was analyzed both before and after the storing to 0.03% and 0.05%, resp., and corresponds to an increase of 0.02% absolute.

The content of esterified 2-ethylhexyl alcohol in Radia 7131 (2-ethylhexyl stearate) was appr. 33% corresponding to appr. 10.5% in sample 2b. The decomposition of 0.02% absolute corresponds to a relative decomposition of appr. 0.2%, which is extremely low.

A storage at 55°C for 42 days corresponds to a storage of several years under normal conditions.

Example 4

The examples show comparison test between different suspensions containing appr. 100 g/l PMP and 100 g/l ethofumesate. In the actual systems the influence of the water content and the pH on properties, such as stability of active substances, physical stability, emulsion stability and the tendency to crystal growth was examined.

The patent literature shows apparently no examples of analogous products, in which both PMP and ethofumesate have been suspended in an oil containing, liquid phase. In comparison with the samples provided in accordance with the present invention a formulation has been prepared which corresponds to the marketed product Betaren+, from which appr. 4% mineral oil has been removed, thereby providing space for appr. 100 g/l PMP and 100 g/l ethofumesate. This product was ground on a Dyno-mill so that 90% of the particles had a particle size not exceeding 5 µ.

Moreover, a total of 25 different samples have been prepared for mutual comparison. All the recipes are included in the chief recipe in Table 4, wherein the amount of water, Gravex 921 oil, oleic acid and isononanoic acid in total constitutes 70.3% by weight. Six sets of samples have been prepared for which the water quantity was being varied from 2% to 49%, and for each set of samples four sub-samples were prepared with pH-values of 3, 3.7, 4.5 and 5.5, respectively. The adjustments were effected with very small amounts of concentrated hydrochloric acid or monoethanol amine.

All samples are prepared according to the same principle as described in Example 1.

The samples have been stored at 45°C. The evaluation was effected after 45 and 87 days and appears from the Tables. After 45 days the samples with a water content of 2% and 49% were discarded, because they had a tendency either to sediment or to gelatinize.

Conclusion: Samples with a small water content have a tendency to sediment.

Samples with a large water content has a tendency to gelatinize.

A low pH may in unison with a higher water content cause the product to become viscous by storing.

The emulsifiability appears to be dependent on the pH but is of course also dependent on the formulation proper.

An initiating instability of PMP is noticed at pH 5.5. The decomposition may, however, not be characterized as unacceptable and particularly not if the water content is high (39%).

A limited tendency to crystal growth is noticed after 87 days of storage, independent of pH. The crystal growth decreases at increasing water content. It is a characteristic feature that all samples have a fairly high content of fine-grained active substance.

In comparison, the "Betanal+"-copy shows a pronounced tendency to crystal growth after 45 days of storage at 45°C. At the same time the sample had become rather viscous and could only after thorough agitation be homogenized again. The emulsifiability could after the 45 days merely be characterized as reasonable, but not good. A tendency to decomposition of ethofumesate was observed.

An indirect, contributory reason for the low crystal growth in compositions 4/5 to 4/20 is the presence of the polymeric stabilizer.

Table 4a

| Raw material component | Composition by % | |
|---|---|---|
| Active component: | | |
| PMP, techn. 97% | 10.3 | |
| Ethofumesate, techn. 97% | 10.3 | |
| Oil + water in total: | 70.15 | |
| Emulsifier component: | | |
| Berol 02 [15)] | 1.05 | Non-ionic emuls. |
| Berol 269 [5)] | 0.3 | Non-ionic emuls. |
| Synperronic NX [16)] | 0.6 | Non-ionic emuls. |
| Berol 922 [17)] | 0.45 | Non-ionic emuls. |
| Berol 192 [40)] | 0.45 | Non-ionic emuls. |
| Emulsogen EL [18)] | 0.15 | Non-ionic emuls. |
| Atlox 1285 [19)] | 0.3 | Non-ionic emuls. |
| DDSA [20)] | 0.7 | Emulsif. type g |
| Morwet EFW [21)] | 0.3 | Emulsif. type e |
| Berol 724 [22)] | 0.7 | Emulsif. type a |
| Gafac RE 410 [23)] | 0.45 | Emulsif. type a |
| Sulfosoft [26)] | 0.3 | Emulsif. type b |
| *Acrylon All [27)] | 0.5 | Emulsif. type h |
| Monoethanolamin | 0.2 | |
| Polymer stabilizer: | | |
| Mowiol 3/83 [26)] | 0.3 | |
| Filler of inorganic acid: | | |
| Attagel % [11)] | 1.5 | |
| Formic acid, 85% | 1.0 | |
| Summed recipe: | | |
| Active content, 97% | 20.6 | |
| Emulsifier component | 6.45 | |
| Polymer stabilizer | 0.3 | |
| Filler and inorg. acid | 2.35 | |
| Oil and water | 70.30 | |

*Delivered as an aqueous solution, but indicated on the basis of the solids content.

Table 4b

| Storage at 45°C | | | | | | |
|---|---|---|---|---|---|---|
| Composition | | No. | pH | Evaluation after 45 days | Evaluation after 87 days | |
| | | | | Appearance | Appearance | Emulsifiability |
| Water | 2.05% | 1 | 3 | | | |
| Gravex 921 | 63.25% | 2 | 3.7 | | | |
| Oleic acid | 2 % | 3 | 4.5 | | | |
| Isononanoic acid | 3 % | 4 | 5.5 | | | |
| Water | 6.05% | 5 | 3 | free-flowing | free-flowing | bad |
| Gravex 921 | 59.24% | 6 | 3.7 | free-flowing | free-flowing | good |
| Oleic acid | 2 % | 7 | 4.5 | free-flowing | free-flowing | good |
| Isononanoic acid | 3 % | 8 | 5.5 | free-flowing | precipitation | reasonable |
| Water | 17.55% | 9 | 3 | free-flowing | viscous | bad |
| Gravex 921 | 49 % | 10 | 3.7 | free-flowing | partially viscous | reasonable |
| Oleic acid | 1.5 % | 11 | 4.5 | free-flowing | free-flowing | good |
| Isononanoic acid | 2.25% | 12 | 5.5 | free-flowing | free-flowing | reasonable |
| Water | 27.55% | 13 | 3 | free-flowing | viscous | bad |
| Gravex 921 | 39 % | 14 | 3.7 | free-flowing | partially viscous | bad |
| Oleic acid | 1.5 % | 15 | 4.5 | free-flowing | free-flowing | good |
| Isononanoic acid | 2.25% | 16 | 5.5 | free-flowing | free-flowing | good |
| Water | 39.2 % | 17 | 3 | free-flowing | viscous | bad |
| Gravex 921 | 29 % | 18 | 3.7 | free-flowing | partially viscous | bad |
| Oleic acid | 0.85% | 19 | 4.5 | free-flowing | free-flowing | reasonable |
| Isononanoic acid | 1.25% | 20 | 5.5 | free-flowing | free-flowing | good |
| Water | 49.2 % | 21 | 3 | Gelatinized | | |
| Gravex 921 | 19 % | 22 | 3.7 | Gelatinized | | |
| Oleic acid | 0.85% | 23 | 4.5 | Gelatinized | | |
| Isononanoic acid | 1.25% | 24 | 5.5 | Gelatinized | | |

Table 4c

| No. | PMP at 45°C | | | Ethofumesate at 45°C | | | 87 days at 45°C Particle size 90 ≦ appr. |
|---|---|---|---|---|---|---|---|
| | start | 45 days | 87 days | start | 45 days | 87 days | |
| 5 | 9.5 | 9.4 | 9.5 | 9.7 | 9.6 | 9.7 | |
| 6 | 9.4 | 9.4 | 9.3 | 9.6 | 9.6 | 9.6 | 15μ |
| 7 | 9.4 | 9.4 | 9.3 | 9.6 | 9.7 | 9.7 | rather fine-grained |
| 8 | 9.3 | 8.8 | 8.6 | 9.5 | 9.2 | 9.3 | |
| 9 | 9.4 | 9.4 | 9.5 | 9.4 | 9.4 | 9.4 | |
| 10 | 9.3 | 9.3 | 9.4 | 9.4 | 9.4 | 9.5 | |
| 11 | 9.3 | 9.3 | 9.3 | 9.4 | 9.4 | 9.5 | 10 to 15μ |
| 12 | 9.2 | 9.1 | 9.0 | 9.3 | 9.4 | 9.5 | very fine-grained |
| 13 | 9.4 | 9.4 | 9.5 | 9.5 | 9.5 | 9.5 | |
| 14 | 9.4 | 9.4 | 9.4 | 9.4 | 9.5 | 9.5 | |
| 15 | 9.4 | 9.3 | 9.4 | 9.4 | 9.5 | 9.5 | 10μ |
| 16 | 9.4 | 9.1 | 8.9 | 9.4 | 9.4 | 9.5 | very fine-grained |
| 17 | 9.9 | 9.9 | 10.0 | 10.1 | 10.0 | 9.9 | |
| 18 | 9.9 | 9.8 | 9.8 | 10.1 | 10.1 | 9.9 | 10μ |
| 19 | 9.8 | 9.9 | 9.9 | 10 | 10.1 | 10.0 | very fine-grained |
| 20 | 9.8 | 9.7 | 9.6 | 10 | 10 | 10.0 | |
| "Betanal+" with 10% PMP + 10% ethofumesate | | start 10.4% | 45 days 10.3% | start 10.6% | 45 days 10.3% | | 20 to 25μ very fine-grained |
| pH (1:10):3,1 | | the sample had become rather viscous after resting the 45 days in the heating chamber and could only difficultly be made homogeneous again. Emulsifiabiity after 45 days i heating chamber may only be characterized as reasonable. | | | | | |

Example 5

The examples show comparison tests between the marketed product Betanal+ and the composition sample 2b, described in Example 2. The purpose of the comparison is to evaluate the tank mixing properties of the products with other pesticides.

Traditional testing methods of evaluating the emulsion stability are based on agitating the samples in different qualities of water and letting the samples rest in sedimentation glasses and to effect at different times a visual evaluation of precipitated material both at the top and at the bottom. If tank mixing experiments with the above mentioned two products are carried out according to the same principle, the testing frequently shows that the products in the tank mixture with other pesticides do not provide inconvenient precipitations.

In practical circumstances oily suspension preparations frequently behave in another way, since there is a non-unimportant risk that a more or less intense contact between the suspended oil drops and solid particles by the dissolution of the emulsifier component in the water phase results in an adhesion between oil and particles. When carrying out a relevant testing it is therefore necessary that the mixtures are stirred constantly.

In the described tank mixing experiments that appear from Table 5, the agitation is effected in a 150 ml beaker by stirring moderately quickly with a magnet. In all experiments the quantity of water amounts to 100 ml. The tank mixture is effected by dispersing at first the oil-containing PMP-preparation in water, following which the second pesticidal preparation is added while stirring. The samples were evaluated after ½ hour, 1 hour and 2 hours, after the agitation had been stopped for two minutes,

Conclusion: The experiments show unambiguously that preparation 2b is better suited for tank mixing with Nortron and Fusilade than the nowadays marketed product Betanal+. It appears that Betanal+ in a tank mixture with Nortron preferably has to be as acidic as possible. It appears, however, to be unrealistic to lower the pH-value of Betanal+.

Table 5

| Preparation | Sample 2b | | Betanal+ charge 902 1) | |
|---|---|---|---|---|
| Dilution water | De-ionized water | Municipal water 20-25°dH | De-ionized water | Municipal water 20-25°dH |
| Stirring with magnet for 2 h: without mixing with product | tight emulsion no precipitation | tight emulsion no precipitation | tight emulsion no precipitation | tight emulsion no precipitation |
| 1% PMP preparation + 1% Nortron 2) and stirring for 2 h: | | | | |
| 4) PMP conc. not adjusted | tight emulsion no precipitation | tight emulsion no precipitation | 2 h: coating | ½ h: coating |
| 5) PMP conc. adjusted with HCl | " " | " " | 2 h: coating | 2 h: coating |
| 6) PMP conc. adjusted with monoethanol amine | " " | " " | ½ h: coating | ½ h: coating |
| 1% PMP preparation + 1% Fusilade 3) and stirring for 2 h | tight emulsion no precipitation | tight emulsion no precipitation | 2 h: coating | 2 h: small coating |

1) Oil containing suspension concentrate with 160 g/l PMP from Schering AG
2) Emulsion concentrate with 200 g/l ethofumesate from Schering AG
3) Emulsion concentrate with 250 g/l fluazifop-butyl from ICI

| | Sample 3b | Betanal+ |
|---|---|---|
| 4) with no pH-setting, pH (1:10) | 3.8 | 3.1 |
| 5) +0,2 g/l conc. HCl, pH (1:10) | 3.4 | 2.9 |
| 6) +0,1-0,2 g/l MEA, pH (1:10) | 4.4 | 3.5 |

Example 6

The purpose of the experiment is to illustrate the influence of a separately added polymeric stabilizer to tank mixtures containing an oily suspension preparation with 160 g/l PMP.

It appears from Example 5 that Betanal+ is not appropriate for tank mixing with Nortron and Fusilade. The Examples in Table 6 illustrate the effect appr. 3% polyvinyl alcohol presents, calculated on the basis of the added amount of Betanal(+).

Conclusion: The addition of 3% polyvinyl alcohol, calculated on the basis of the amount of Betanal+, exerts a favourable effect on the tank mixing properties without, however, attaining the effect that only 0.3% polyvinyl alcohol presents in recipe 2b. It should be observed that the addition of polyvinyl alcohol does not solve the tendency of Betanal+ to present crystal growth during storage.

Table 6

<table>
<tr><td>Preparation 2b</td><td colspan="2">Betanal+ charge902</td><td colspan="2">Betanal+ charge 902</td></tr>
<tr><td>Conc. in dilution</td><td colspan="2">1 vol%</td><td colspan="2">1 vol%</td></tr>
<tr><td>Additive addition</td><td colspan="2">none</td><td colspan="2">0.1% af 30% Mowiol 3/83 [26)] = 0.03% Mowiol</td></tr>
<tr><td>Dilution water</td><td>Deionized water</td><td>Municipal water 20-25°dH</td><td>Deionized water</td><td>Municipal water 20-25°dH</td></tr>
<tr><td>Stirring with magnet for 2 h in mixture with 1% Nortron.</td><td></td><td></td><td></td><td></td></tr>
<tr><td>PMP conc. not pH adjusted</td><td>2 h: deposit</td><td>½ h: deposit</td><td>2 h: neat</td><td>2 h: precipitations like granules</td></tr>
<tr><td>PMP conc. adjust. with HCl</td><td>2 h: deposit</td><td>2 h: deposit</td><td>2 h: neat</td><td>2 h: neat</td></tr>
<tr><td>PMP conc. adjusr. with MEA (see Example 5)</td><td>½ h: deposit</td><td>½ h: deposit</td><td>2 h: precipitations like granules</td><td>2 h: precipitations like granules</td></tr>
<tr><td>Stirring with magnet for 2 h in mixture with Fusilade</td><td>2 h: deposit</td><td>2 h: minor deposit</td><td>2 h: few granules</td><td>2 h: neat</td></tr>
</table>

Example 7

The purpose of this series of experiments is to illustrate the importance of the polymeric stabilizer in connection tank mixing of with oil-containing PMP-preparations with Fusilade.

Composition 7 was prepared as the basic recipe of the tested formulations. The composition appears from Table 7 and the preparing procedure was corresponding to that described for composition 2b in Example 2.

920 parts by weight of composition 7 were agitated with different quantities of 30% by weight of Mowiol 3/83 solution varying from 10 and up to 600 parts by weight. In case the total amount of mixture did not exceed 1000 parts by weight it was diluted with water up to 1000.

The emulsion stability of the samples was tested under thorough stirring with a magnet in a 150 ml beaker containing 100 ml liquid. The samples were evaluated after 2 hours. The agitation was effected in deionized water and tap water, alone and in mixture with Fusilade, respectively. All concentrations were at 1% by volume.

Conclusion: The samples to which no solution of Mowiol was added, provided within one hour by stirring in tank mixing with Fusilade distinct, precipitated coatings at the bottom and on the magnet. In contradiction thereto, none of the other mixtures showed a tendency to cause precipitations. It should, however, be observed that certain admixtures corresponding to that the Mowiol amount of the concentrate varied from 5.3 to 9.1% by weight, on standing had a tendency at the top of the beakers to precipitate very small amounts of oil. But it was an essential cosmetic problem without any practical importance. The mixtures which in the concentrate contained 11.8% by weight of Mowiol, did not show the same tendency and offered very stable emulsions. The same was the case when the Mowiol amount varied from 0.3 to 2.4% by weight.

Table 7a

| 7 | | |
|---|---|---|
| Raw material component | composition in parts by weight | |
| Active component: | | |
| PMP, techn. 97% | 170 | |
| Oil: | | |
| Gravex 921 [12)] | 80 | |
| Radia 7131 [14)] | 320 | |
| Isononanoic acid | 42 | |
| Oleic acid | 16 | |
| Emulsifier component: | | |
| Berol o2 [15)] | 15 | Non-ionic emuls. |
| Berol 922 [17)] | 6 | Non-ionic emuls. |
| Berol 724 [22)] | 4 | Emuls. type a |
| Gafac RE 410 [23)] | 2 | Emuls. type a |
| *Hostapur SAS 60 [28)] | 1 | Emuls. type b |
| Sulfosoft [27)] | 2 | Emuls. type b |
| *Acrylon A 11 [26)] | 3 | Emuls. type h |
| Monoethanol amine | 1 | |
| Acid stabilizer: | | |
| Salicylic acid | 10 | |
| Water and filler: | | |
| Water | 233 | |
| Attagel 40 [11)] | 15 | |
| Summed recipe: | | |
| Active content | 170 | |
| Oil | 458 | |
| Emulsifier component | 34 | |
| Acid stabilizer | 10 | |
| Water and filler | 248 | |
| In total | 920 | pH (1:10) : 3,9 |

*Delivered as an aqueous solution but indicated on the basis of solids content.

Table 7b

| Sample | Parts 30% Mowiol 3/83 [29)] | Parts by weight in total | % by weight Mowiol | Stirring on magnet stirrer for 2 hours | | | |
|---|---|---|---|---|---|---|---|
| | | | | De-ionized water 1% solution | 1%+1% Fusilade | 20-25°dH 1% sol. | tap water 1%+1% Fusilade |
| 7-1 | - | 1000 | 0 | 2 h: neat | ½ h: coating | 2 h: neat | ½ h: coating |
| 7-2 | 10 | 1000 | 0.3 | 2 h: neat | 2 h: neat | 2 h: neat | 2 h: neat |
| 7-3 | 20 | 1000 | 0.6 | 2 h: neat | 2 h: neat | 2 h: neat | 2 h: neat |
| 7-4 | 40 | 1000 | 1.2 | 2 h: neat | 2 h: neat | 2 h: neat | 2 h: neat |
| 7-5 | 80 | 1000 | 2.4 | 2 h: neat | 2 h: neat | 2 h: neat | 2 h: neat |
| 7-6 | 200 | 1120 | 5.3 | 2 h: neat | 2 h: neat | 2 h: * | 2 h: neat |
| 7-7 | 300 | 1220 | 7.4 | 2 h: * | 2 h: * | 2 h: * | 2 h: neat |
| 7-8 | 400 | 1320 | 9.1 | 2 h: * | 2 h: * | 2 h: * | 2 h: neat |
| 7-9 | 600 | 1520 | 11.8 | 2 h: neat | 2 h: neat | 2 h: neat | 2 h: neat |

* neat, but may on standing precipitate oil

Example 8

The examples in this series of experiments illustrate the influence exerted by various, selected polymeric stabilizers by tank mixing of oil containing PMP-preparations with Fusilade.

A pre-concentrate corresponding to composition 7 in Table 7 was used as the basis of the recipes. 80 parts by weight of various, water-based polymeric solutions were added to 920 parts by weight of said composition, so that the compositions in total attained an amount of 1000 parts by weight. The final compositions appear from Table 8. Tank mixing with Fusilade was effected so that the concentrations of the PMP-preparations and Fusilade in all mixtures constituted 1% by volume of each preparation. The tank mixtures were evaluated after stirring for two hours in deionized water and in tap water. The results appear from Table 8.

Conclusion: The experiments clearly show that the tested polymers present a stabilizing effect and that they hamper the precipitation of conglutinated material of finely ground pesticide and oil in the prepared use solutions.

Table 8

| Sample Polymer | | % by weight in preparation | Stirring on magnet stirrer 1% + 1% Fusilade | |
|---|---|---|---|---|
| | | | Deionized weight | Tap water water |
| 1 | none | - | ½ h: coating | ½ h: coating |
| 2 | Mowiol 10/74 [30)] | 0.3 | 2 h: neat | 2 h: neat |
| 3 | Mowiol 4/80 [31)] | 0.3 | 2 h: neat | 2 h: neat |
| 4 | Mowiol 3/98 [32)] | 0.3 | 2 h: neat | 2 h: neat |
| 5 | Mowiol 40/88 [33)] | 0.3 | 2 h: neat | 2 h: neat |
| 6 | Natrosol 250/HR [35)] | 0.2 | 2 h: neat | 2 h: neat |
| 7 | Natrosol 250/HR [35)] | 0.5 | 2 h: neat | 2 h: neat |
| 8 | Natrosol 250/HR [35)] | 0.8 | 2 h: neat | 2 h: neat |
| 9 | Methocel A 15LW [36)] | 0.5 | 2 h: neat | 2 h: neat |
| 10 | Celacol HPM 450 [37)] | 0.5 | 2 h: neat | 2 h: neat |
| 11 | Celacol HPM 450 [37)] | 4 | 2 h: neat | 2 h: neat |

Example 9

The examples in this series of experiments also illustrates the influence exerted by polymeric stabilizers in tank mixings of the oil containing PMP-suspension preparations with Fusilade.

Three pre-concentrates 9a, 9b and 9c were prepared, as shown in Table 9. 50 parts by weight of various, water-based polymeric solutions were added to 950 parts by weight of pre-concentrate, so that the compositions in total attained an amount of 1000 parts by weight of which the polymeric stabilizer constituted 1, 2 or 5 parts by weight. Tank mixing with Fusilade was effected so that the concentrations of the PMP-preparations and Fusilade in all mixtures constituted 1% of each preparation. The tank mixtures were evaluated after stirring for 1, 2 and 3 hours in deionized water and tap water. The results appear from Table 9.

Conclusion: The experiments clearly show that the polymeric stabilizer hampers the precipitation of conglutinated material in the agitated use mixtures.

Table 9

| Raw material comp. | 9a | 9b | 9c | Emulsifier type |
|---|---|---|---|---|
| | Composition, parts by weight | | | |
| Active component: | | | | |
| PMP, techn. 97% | 170 | 170 | 170 | |
| Oil: | | | | |
| Gravex 921 [12)] | 80 | 80 | 80 | |
| Radia 7131 [14)] | 320 | 240 | 240 | |
| Radia 7204 [41)] | | 120 | 120 | |
| Oleic acid | 15 | 18 | 15 | |
| Radiacid [42)] | 17 | | | |
| Emulsifier component: | | | | |
| Berol 02 [15)] | 15 | 15 | 15 | Non-ion. |
| Berol 922 [17)] | 6 | 6 | 6 | Non-ion. |
| DDSA [20)] | 4 | 3 | 3 | type g |
| Berol 724 [22)] | 4 | 4 | 4 | type a |
| Gafac RE 410 [23)] | 3 | 3 | 3 | type a |
| Sulfosoft [26)] | 2 | 2 | 2 | type b |
| Monoethanol amine | 2 | 2 | 2 | |
| Acid stabilizer: | | | | |
| Salicylic acid | 10 | 10 | 5 | |
| Benzoic acid | | | 5 | |
| Water and filler: | | | | |
| Water | 287 | 262 | 265 | |
| Attagel 40 [11)] | 15 | 15 | 15 | |

| Summed recipe: | | | |
|---|---|---|---|
| Active content, 97% | 170 | 170 | 170 |
| Oil | 432 | 458 | 455 |
| Emulsifier comp. | 36 | 35 | 35 |
| Acid stabilizer | 10 | 10 | 10 |
| Water and filler | 302 | 277 | 280 |
| Parts by weight in total | 950 | 950 | 950 |

Table 9 (continued)

| Sample | Recipe/polymer | % by weight in preparation | Stirring on magnet stirrer 1% + 1% Fusilade: Deionized water | Stirring on magnet stirrer 1% + 1% Fusilade: Tap water |
|---|---|---|---|---|
| 1 | 9a/none | - | 1 h: deposit | 1 h: deposit |
| 2 | 9a/Mowiol 3/83 [29)] | 0.5 | 3 h: neat | 3 h: neat |
| 3 | 9a/Mowiol 4/80 [31)] | 0.5 | 3 h: neat | 3 h: neat |
| 4 | 9a/Mowiol 40/88 [33)] | 0.5 | 3 h: neat | 3 h: neat |
| 5 | 9a/Tylose H 10 [43)] | 0.5 | 3 h: neat | 3 h: neat |
| 6 | 9a/Tylose MH 20 [44)] | 0.2 | 3 h: neat | 3 h: neat |
| 7 | 9a/Tylose MH 20 [45)] | 0.5 | 3 h: neat | 3 h: neat |
| 8 | 9a/Tylose MH 50 [45)] | 0.2 | 3 h: neat | 3 h: neat |
| 9 | 9a/Tylose MH 50 [46)] | 0.5 | 3 h: neat | 3 h: neat |
| 10 | 9b/none | - | 1 h: deposit | 2 h: minor deposit |
| 11 | 9b/Mowiol 3/83 [29)] | 0.5 | 3 h: neat | 3 h: neat |
| 12 | 9b/Mowiol 4/80 [31)] | 0.5 | 3 h: neat | 3 h: neat |
| 13 | 9b/Mowiol 40/88 [33)] | 0.5 | 3 h: neat | 3 h: neat |
| 14 | 9b/Mowiol 10/74 [30)] | 0.5 | 3 h: neat | 3 h: neat |
| 15 | 9b/Tylose H 10 [43)] | 0.5 | 3 h: neat | 3 h: neat |
| 16 | 9b/Tylose H 20 [44)] | 0.5 | 3 h: neat | 3 h: neat |
| 17 | 9b/Tylose MH 20 [45)] | 0.2 | 3 h: neat | 3 h: neat |
| 18 | 9b/Tylose MH 20 [45)] | 0.5 | 3 h: neat | 3 h: neat |
| 19 | 9b/Tylose MH 50 [46)] | 0.2 | 3 h: neat | 3 h: neat |
| 20 | 9c/none | - | 2 h: deposit | 3 h: minor deposit |
| 21 | 9c/Mowiol 10/74 [30)] | 0.2 | 3 h: neat | 3 h: neat |
| 22 | 9c/Mowiol 10/74 [30)] +Methocel A15LW [36)] | 0.1<br>0.1 | 3 h: neat | 3 h: neat |
| 23 | 9c/Methocel A4C [38)] | 0.2 | 3 h: neat | 3 h: neat |
| 24 | 9c/Natrosol Plus[34)] | 0.2 | 3 h: neat | 3 h: few granules |
| 25 | 9c/Berol EHM 100[43)] | 0.2 | 3 h: neat | 3 h: neat |

Example 10

The examples in this series of experiments illustrate the influence exerted by various polymeric stabilizers preferably selected among co-polymerisates of vinylpyrrolidone.

While preparing this specification Fusilade is being launched in a new variant, i.e. Fusilade 25 EW, to be used in half the dosage of traditional Fusilade. Apparently, both products are going to be marketed. In particular as regards tank mixing with Fusilade 25 EW, polymeric stabilizers on the basis of vinylpyrrolidone appear to be advantageous.

As the basis of the recipes pre-concentrates were used corresponding to the compositions 10a and 10b in Table 10. Said compositions were prepared by grinding at first a 50% aqueous dispersion of PMP in water. The aqueous PMP-slurry further contained 1.25% Berol 02, 0.625% Berol 922 and 0.625% Berol 724. After dilution to samples 10a and 10b it corresponds to 4 g/l, 2 g/l and 2 g/l, respectively. Grinding was carried out on a 0.6 l Dyno-mill at a circumferential velocity of appr. 10 m/sec and at a dosing velocity of appr. 3 l/h or until at least 90% of the particles had a grain size of less than 4 $\mu$.

The remaining amount of water was used for diluting the aqueous PMP-slurry. Then possible contents of Acrylon A 11 and DDSA was being added separately while stirring, the DDSA having at first been reacted with monoethanol amine, as stated under Example 2. Subsequently, the remainder of the emulsifier amount except the monoethanol amine and Berol 02 was diluted to a pre-concentrate and admixed in the aqueous PMP-slurry. Under thorough agitation Attagel was slurried into the PMP-slurry to a homogeneous paste. Sodium chloride and monoethanol amine were followingly added.

The oil components plus Berol 02, benzoic acid and optionally salicylic acid were mixed and dissolved into an oil pre-concentrate and added to the aqueous paste solution. Finally, the pH-value (1:10) was adjusted by a supplementary addition of monoethanol amine at pH 4.0.

50 parts by weight of various water-based polymeric solutions were added to 950 parts by weight of pre-concentrate (10a or 10b) so that the compositions in total consisted of 1000 parts by weight.

Tank mixings with Fusilade and Fusilade 25 EW were carried out. The results are inserted in the table.

Conclusion: The experiments clearly show that the tested polymers present a stabilizing effect and that they hamper the precipitation of conglutinated material of finely ground pesticide and oil in the diluted use mixtures.

Table 10

| Raw material comp. | 10a Composition, | 10b parts by weight | Emulsifier type |
|---|---|---|---|
| Active component: | | | |
| PMP, techn. | 170 | 170 | |
| Oil: | | | |
| Gravex 921 [12)] | 75 | 80 | |
| Radia 7131 [14)] | 305 | 230 | |
| Radia 7204 [4)] | | 110 | |
| Isononanoic acid | 40 | | |
| Oleic acid | 15 | 14 | |
| Emulsifier component: | | | |
| Berol 02 [15)] | 17 | 17 | Non-ion. |
| Berol 922 [17)] | 6 | 6 | Non-ion. |
| DDSA [20)] | 1 | 3 | type g |
| Berol 724 [22)] | 4 | 4 | type a |
| Gafac RE 410 [23)] | 2 | 3 | type a |
| Sulfosoft [27)] | 2 | 2 | type b |
| *Acrylon A 11 [26)] | 3 | | type h |
| Monoethanol amine | 2 | 2 | |
| Acid stabilizer: | | | |
| Salicylic acid | 5 | 6 | |
| Benzoic acid | 5 | 4 | |
| Water and filler: | | | |
| Water | 283 | 284 | |
| Attagel 40 [11)] | 5 | 5 | |
| Sodium chloride | 10 | 10 | |
| Summed recipe: | | | |
| Active content | 170 | 170 | |
| Oil | 435 | 434 | |
| Emulsifier component | 37 | 37 | |
| Acid stabilizer | 10 | 10 | |
| Water and filler | 298 | 299 | |
| | 950 | 950 | |

*Delivered as an aqueous solution but is indicated on the basis of the solids content.

| Pre-conc. | Polymer | % by weight in preparation | Stirring on magnet stirrer 1% conc. | |
|---|---|---|---|---|
| | | | Deionized water | Tap water |
| 10a | none | | 1h:minor deposit | 1h:deposit |
| 10a | Methocel A15LW [36)] | 0.3 | 3h: neat | 3h: neat |
| 10a | Agrimer VA-S-64 [61)] | 0.5 | 3h: neat | 3h: neat |
| 10a | Agrimer AL-904 [62)] | 0.5 | 3h: neat | 3h: neat |
| 10a | none | - | 1h: minor deposit | 3h:deposit |
| 10b | Methocel A15LW [36)] | 0.3 | 3h: neat | 3h: neat |
| 10b | Agrimer VA-S-64 [61)] | 0.5 | 3h: neat | 3h: neat |
| 10b | Agrimer AL-904 [62)] | 0.5 | 3h: neat | 3h: neat |

| Pre-conc. | Polymer | % by weight in preparat. | Stirring on magnet stirrer 1% conc. + ½% Fusilade EW | |
|---|---|---|---|---|
| | | | Deionized water | Tap water |
| 10a | none | - | 1h:deposit | 1h:deposit |
| 10a | Methocel A15LW [36)] | 0.3 | 3h: neat | 3h:neat |
| 10a | Agrimer VA-S-64[61)] | 0.5 | 3h: neat | 3h:neat |
| 10a | Agrimer AL-904 [62)] | 0.5 | 3h: neat | 3h:neat |
| 10b | ingen | - | 3h: deposit | 3h:deposit |
| 10b | Methocel A15LW [36)] | 0.3 | 3h: neat | 3h:neat |
| 10b | Agrimer VA-S-64[61)] | 0.5 | 3h: neat | 3h:neat |
| 10b | Agrimer AL-904 [62)] | 0.5 | 3h: neat | 3h:neat |

| Pre-conc. | Polymer | % by weight in preparat. | Stirring on magnet stirrer 1% conc. + 1% Fusilade | |
|---|---|---|---|---|
| | | | Deionized vand | Tap water vand |
| 10a | none | | 1h: deposit | 1h:deposit |
| 10a | Methocel A15LW [36)] | | 3h: neat | 3h:neat |
| 10a | Agrimer VA-S-64 [61)] | | 3h: neat | 3h:neat |
| 10a | Agrimer AL-90 [62)] | | 3h: neat | 3h:neat |

Example 11

This series of experiments shows examples of optimized recipes with different oil compositions and a somewhat different emulsifier composition.

The preparing procedure was the same as that described for Composition 2b in Example 2.

Conclusion: All the compositions 11a to 11d present a high emulsifying stability, both in dilutions alone and in admixture with Fusilade. The polymeric stabilizer contributes to the stability.

Table 11

| Raw material comp. | 11a | 11b | 11c | 11d | Emulsifier |
|---|---|---|---|---|---|
| | Composition in % | | | | |
| Active component: | | | | | |
| PMP, techn., 97% | 17 | 17 | 17 | 17 | |
| Oil: | | | | | |
| Gravex 921 [12)] | 8 | 8 | 8 | 8 | |
| Radia 7131 [14)] | 32 | 24 | 32 | 32 | |
| Radia 7204 [41)] | | 12 | | | |
| Isonanoic acid | | | 4.2 | 4.2 | |
| Oleic acid | 1.5 | 1.8 | 1.6 | 1.6 | |
| Radiacid 0198 [42)] | 1.7 | | | | |
| Emulsifier component: | | | | | |
| Berol 02 [15)] | 1.5 | 1.5 | 1.5 | 1.5 | Non-ion. |
| Berol 922 [17)] | 0.6 | 0.6 | 0.6 | 0.6 | Non-ion. |
| DDSA [20)] | 0.4 | 0.3 | | | type g |
| Berol 724 [22)] | 0.4 | 0.4 | 0.4 | 0.4 | type a |
| Gafac RE 410 [23)] | 0.3 | 0.3 | 0.1 | 0.2 | type a |
| Hostapur *SAS 60 [28)] | | | | 0.2 | type b |
| Sulfosoft [26)] | 0.2 | 0.2 | 0.2 | 0.2 | tybe b |
| *Acrylon A 11 [27)] | | | | 0.2 | type h |
| Monoethanolamin | 0.2 | 0.2 | 0.1 | 0.1 | |
| Acid stabilizer: | | | | | |
| Salicylic acid | 1 | 1 | 1 | | |
| Benzoic aid | | | | 1 | |
| Polymeric stabilizer: | | | | | |
| Mowiol 3/83 [29)] | 0.3 | 0.3 | 0.6 | 0.6 | |
| Water and filler: | | | | | |
| Water | 33.4 | 30.9 | 31.2 | 30.7 | |
| Attagel 40 | 1.5 | 1.5 | 1.5 | 1.5 | |

*Delivered as an aqueous solution but is indicated on the basis of the solids content.

| | 11a | 11b | 11c | 11d |
|---|---|---|---|---|
| Summed recipe: | | | | |
| Active content, 97% | 17 | 17 | 17 | 17 |
| Oil | 43.2 | 45.8 | 45.8 | 45.8 |
| Emulsifier component | 3.6 | 3.5 | 2.9 | 3.4 |
| Acid stabilizer | 1 | 1 | 1 | 1 |
| Polymeric stabilizer | 0.3 | 0.3 | 0.6 | 0.6 |
| Water and filler | 34.9 | 32.4 | 32.7 | 32.2 |
| pH-adjusted (1:10) with HCl/MEA to | 3.7 | 3.8 | 4.1 | 3.9 |
| Stirring with magnet in 1% dilution | | | | |
| Deionized water: | 4h:neat | 4h:neat | 4h:neat | 4h:neat |
| Tap water: | 4h:neat | 4h:neat | 4h:neat | 4h:neat |
| Stirring with magnet in 1% dilution +1% Fusilade. | | | | |
| Deionized water: | 4h:neat | 4h:neat | 4h:neat | 4h:neat |
| Tap water: | 4h:neat | 4h:neat | 4h:neat | 4h:neat |

Example 12

This series of experiments show examples of optimized recipes containing both PMP and ethofumesate.

The preparing procedure was similar to that described for composition 2b in example 2. The ethofumesate was ground separately as an aqueous dispersion containing 515 g techn ethofumesate, 10 g Berol 02 and 475 g water. The grinding was effected on a 0.6 l Dyno-mill with a circumferential velocity of appr. 10 m/sec. This pre-mixture was an ingredient of the final composition in the same manner as the aqueous pre-mixed PMP suspension.

Conclusion: The compositions 12a and 12b are well suited for tank mixing with Fusilade.

Table 12

| Raw material component | 12a Composition in % | 12b Composition in % | Emulsifier type |
|---|---|---|---|
| Active component: | | | |
| PMP, techn., 97% | 10.5 | 10.5 | |
| Ethofumesate, techn., 97% | 10.5 | 10.5 | |
| Oil: | | | |
| Gravex 921 [12)] | 21 | 22 | |
| Radia 7131 [14)] | 21 | 12 | |
| Radia 7204 [41)] | | 10 | |
| Isononanoic acid | 4 | | |
| Oleic acid | 1.4 | 1 | |
| Emulsifier component: | | | |
| Berol 02 [15)] | 1.7 | 1.6 | Non-ion. |
| Berol 922 [17)] | 0.5 | 0.5 | Non-ion. |
| Berol 26 [6)] | 0.1 | 0.1 | Non-ion. |
| Berol 192 [40)] | 0.2 | 0.2 | Non-ion. |
| Emulsogen El [18)] | 0.1 | 0.1 | Non-ion. |
| DDSA [20)] | 0.1 | 0.1 | type g |
| Berol 724 [22)] | 0.3 | 0.3 | type a |
| Gafac RE 410 [23)] | 0.2 | 0.2 | type a |
| Sulfosoft [26)] | 0.2 | 0.2 | type b |
| *Acrylon A11 [27)] | | 0.2 | type h |
| Monoethanol amine | 0.1 | 0.1 | |
| Acid stabilizer: | | | |
| Salicylic acid | 1 | 1 | |
| Polymeric stabilizer: | 0.3 | 0.3 | |
| Mowiol 3/83 [29)] | | | |
| Water and filler: | | | |
| Water | 25.8 | 29.1 | |
| Attagel 40 [11)] | 1.0 | | |

*Delivered as an aqueous solution but indicated on the basis of the solids content.

Table 12 (continued)

| | 12a | 12b |
|---|---|---|
| Summed recipe: | | |
| Active content, 97% | 21 | 21 |
| Oil | 47.4 | 45 |
| Emulsifier comp. | 3.5 | 3.6 |
| Acid stabilizer | 1 | 1 |
| Polymeric stabilizer | 0.3 | 0.3 |
| Water and filler | 26.8 | 29.1 |
| pH adjusted (1:10) with HCl/MEA to | 4.0 | 4.0 |
| Stirring with magnet in 1% dilution. | | |
| Deionized water: | 4h: neat | 4h: neat |
| Tap water: | 4h: neat | 4h: neat |
| Stirring with magnet in 1% dilution + 1% Fusilade. | | |
| Deionized water: | 4h: neat | 4h: neat |
| Tap water: | 4h: neat | 4h: neat |

**Claims**

1. Herbicidal compositions in which the herbicidal component is suspended in a fine-grained form in a flowable, oil-containing liquid phase containing at least one component selected from the following group of beet herbicides consisting of phenmedipham (methyl(3-(3-tolylcarbamoyloxy)phenyl)carbamate), ethofumesate ((±)-2-ethoxy-2,3-dihydro-3,3-dimethylbenzofuran-5-yl, methane sulfonate) and metamitron (4-amino-4,5-dihydro-3-methyl-6-phenyl-1,2,4-triazin-5-one), so that the total quantity of herbicide constitutes 1 to 50% by weight, and wherein the liquid phase contains one or more emulsified, solubilized, dissolved or admixed oils selected among carbonhydride oils, triglyceride ester oils, ester oils with one or two ester groups, respectively, per molecule, aliphatic aldehydes, -ketones, -ethers, -alcohols and -acids, the solubility of which in water does not exceed 3% by weight and wherein the solubility of phenmedipham in the oil(s) does not exceed 3% by weight so that the total oil content of the defined oil components constitutes from 4 to 85% by weight, and wherein said herbicidal compositions further contain one or more emulsifiers in an amount of from 1 to 40% by weight, and wherein the herbicidal compositions optionally contain water and optionally a filler and wherein the liquid phase is capable of forming an oil-in-water emulsion or microemulsion when the composition is mixed with water, said herbicidal compositions being <u>characterized</u> by containing at least one polymer which at 60°C is a solid substance and which preferably through dilatation by itself at 20°C becomes stably dilutable/dissolvable in water and which at the same time has a molecular weight of at least 7.000 Dalton, in that neither does the polymer contain polycarboxylates nor co-polymers of oxyethylene and oxypropylene with at least 80% by weight of polyoxyethylene and polyoxypropylene, or hydrophilic biopolymers for which the polymerization has been effected by an industrially controlled fermentation process , said polymer(s) being selected among non-ionic ethers of cellulose, polyvinyl alcohol, polyvinyl alcohol derivatives, polyvinyl pyrrolidone and polyvinyl pyrrolidone derivatives, and in which the total content of the polymeric compound(s) constitute(s) from 0.03 to 25% by weight, all the stated percentages of compoundings of the composition being calculated on the basis of the weight of the total composition.

2. Herbicidal compositions according to claim 1, characterized in that they are two- or multicomponent compositions containing phenmedipham in combination with ethofumesate and/or metamitron.

3. Herbicidal compositions according to claims 1 to 2, characterized in that said polymers form part of the composition in an amount constituting from 0.04 to 15% by weight, in particular 0.05 to 8% by weight, preferably from 0.07 to 5% by weight, rather 0.1 to 3% by weight, and especially constitute from 0.15 to 1.5% by weight, the stated percentages being calculated on the basis of the weight of the total composition.

4. Herbicidal compositions according to claims 1 to 3, characterized in that the total quantity of herbicide amounts to 1 to 45% by weight, calculated on the basis of the weight of the total composition.

5. Herbicidal compositions according to claims 1 to 4, characterized in that the total content of the oil components constitutes 8 to 85% by weight, calculated on the basis of the weight of the total composition.

6. Herbicidal compositions according to claims 1 to 5, characterized in that the solubility of the oil or oils in water at 20°C does not exceed 2%, in particular does not exceed 1% and that the solubility of phenmedipham in the actual oil(s) does not exceed 2%, in particular does not exceed 1%.

7. Herbicidal compositions according to claims 1 to 6, characterized in that the total quantity of herbicide amounts to 4 to 40% by weight, in particular 7 to 35% by weight and especially 10 to 30% by weight, calculated on the basis of the weight of the total composition.

8. Herbicidal compositions according to claims 1 to 6, characterized in that the total oil content constitutes 12 to 77% by weight, in particular 18 to 70% by weight and especially 25 to 64% by weight, calculated on the basis of the weight of the total composition.

9. Herbicidal compositions according to claims 1 to 6, characterized in that the total emulsifier content constitutes 1 to 30% by weight, rather 1 to 18% by weight, preferably 1.5 to 13% by weight, in particular 2 to 9% by weight and especially 2.5 to 5% by weight, calculated on the basis of the weight of the total composition.

10. Herbicidal compositions according to claims 1 to 9, characterized in that the molecular weight of the polymers dilutable/dissolvable in water amounts to at least 10.000 Dalton and in particular no less than 13.000 Dalton.

11. Herbicidal compositions according to claims 1 to 10, characterized in that the non-ionic ethers of cellulose are selected among ($C_{1-2}$-alkyl) cellulose, ((poly)hydroxy-$C_{1-6}$-alkyl) cellulose and ((poly)hydroxy-$C_{1-6}$-alkyl)-($C_{1-12}$-alkyl) cellulose.

12. Herbicidal compositions according to claim 11, characterized in that the non-ionic ethers of cellulose are selected among methyl cellulose, (poly) hydroxyethyl cellulose, (poly)hydroxypropyl cellulose, (poly)hydroxybutyl cellulose, (poly)hydroxy-ethyl-methyl cellulose, (poly)hydroxyethyl-ethyl cellulose, (poly)hydroxypropyl-methyl cellulose and (poly)hydroxybutyl-methyl-cellulose and hydrophobically modified variants thereof, preferably reaction products wherein the defined cellulose ethers have reacted with aldehydes or difunctional aldehydes.

13. Herbicidal compositions according to claims 1 to 10, characterized in that the polyvinyl alcohol derivatives are selected among polyvinyl alcohol, in which up to 35%, preferably 1 to 30% and especially 8 to 15% of the alcohol groups of the polyvinyl alcohol are esterified with a $C_{1-4}$ hydrocarbyl carboxylic acid or in which the polyvinyl alcohol is wholly or partly converted to methyl or ethyl ether, or co-polymerisates, wherein the polyvinyl alcohol or polyvinyl alcohol acetate participate by at least 35% per molecule.

14. Herbicidal compositions according to claims 1 to 10, characterized in that the polyvinyl pyrrolidone derivatives are selected among alkylated polyvinyl pyrrolidone and polyvinylpyrrolidone co-polymerisates, wherein at least 25 mole % of the co-polymer is constituted by vinylpyrrolidone.

15. Herbicidal compositions according to claims 1 to 14, characterized in that the molecular weight of the polymers dissolvable/dilutable in water is below 800.000, rather below 500.000, in particular below 175.000 and especially below 125.000 Dalton.

16. Herbicidal compositions according to claims 1 to 15, characterized in that the oils are selected among carbon hydride oils and ester oils with one or two ester groups, respectively, per molecule.

17. Herbicidal compositions according to claims 1 to 16, characterized in that the initial boiling point of the oil is no less than 180°C, preferably no less than 210°C, in particular no less than 230°C and especially no less than 250°C.

18. Herbicidal compositions according to claim 16, characterized in that the carbon hydride oil(s) has/have an aniline point determined according to DIN 51775 which does not exceed 90°C, in particular does not exceed 87.5°C and especially does not exceed 82.5°C.

19. Herbicidal compositions according to claim 16, characterized in that the ester oils with one or two ester groups per molecule are those whose number of carbon atoms is in the range from 8 to 72, preferably 10 to 60 and in particular 12 to 46 carbon atoms per molecule.

20. Herbicidal compositions according to claims 1 to 19, characterized in that the emulsifiers include at least one non-ionic emulsifier and at least one anionic emulsifier.

21. Herbicidal compositions according to claims 1 to 20, characterized in that they are available as a ready-to-use mixture diluted by the user, all the stated percentages being calculated on the basis of weight of the solids content of said mixture, as defined in the specification.

22. Herbicidal ready-to-use dilutions in which the herbicidal component is suspended in a fine-grained form in an oil-containing water phase and in which the water phase further contains at least one component selected from the group of beet herbicides consisting of phenmedipham (methyl-(3-(3-tolyl-carbamoyloxy)phenyl)carbamate), ethofumesate ((±)-2-ethoxy-2,3-dihydro-3,3-dimethylbenzofuran-5-yl, methane sulfonate) and metamitron (4-amino-4,5-dihydro-3-methyl-6-phenyl-1,2,4-triazin-5-one), so that the total quantity of herbicide constitutes from 0.1 to 4% by weight, and wherein the water phase contains one or more emulsified, solubilized or admixed oils with an initial boiling point of at least 210°C selected among mineral oils, triglyceride ester oils and ester oils with one or two ester groups per molecule and with 8 to 72 carbon atoms per molecule and whose solubility in water at 20°C does not exceed 3% by weight so that the total oil content of the defined oil components constitutes 0.1 to 4% by weight, and wherein said herbicidal ready-to-use dilutions contain one or more emulsifiers in an amount of 0.01 to 2% by weight, said herbicidal compositions being characterized by containing from 0.005 to 0.8% by weight of at least one polymer which at 60°C is a solid substance, and which preferably through a dilatation by itself at 20°C is stably dilutable/dissolvable in water and which concurrently has a molecular weight of at least 7.000 Dalton, in that neither does the polymer comprise polycarboxylates nor co-polymers of oxyethylene and oxypropylene with at least 80% by weight of polyoxyethylene and polyoxypropylene, or hydrophilic biopolymers for which the polymerization has been carried out by an industrially controlled fermentation process, said polymer(s) being selected among non-ionic ethers of cellulose, polyvinyl alcohol, polyvinyl alcohol derivatives, polyvinyl pyrrolidone and polyvinyl pyrrolidone derivatives, and wherein the preferred polymers moreover are further defined in accordance with the preceding claims 10 to 16, all the stated percentages of the composition being calculated on the basis of the weight of the total ready-to-use solution.

**Patentansprüche**

1. Herbizide Zusammensetzungen, worin der herbizide Bestandteil in feinkörniger Form in einer fliessbaren, ölhaltigen Flüssigkeitsphase enthaltend mindestens einen aus der nachstehend angegebenen Gruppe von Rübenherbiziden bestehend aus Phenmedipham (Methyl(3-(3-tolylcarbamoyloxy)phenyl)carbamat), Ethofumesat ((±)-2-Ethoxy-2,3-dihydro-3,3-dimethylbenzofuran-5-yl, methansulfonat) und Metamitron (4-Amino-4,5-dihydro-3-methyl-6-phenyl-1,2,4-triazin-5-on) ausgewählten Bestandteil, suspendiert ist, so dass die gesamte Menge von Herbiziden 1 bis 50 Gew.-% ausmacht, und worin die Flüssigkeitsphase ein oder mehrere unter Carbonhydridölen, Triglyceridesterölen, Esterölen mit einer bzw. zwei Estergruppen pro Molekül, aliphatischen Aldehyden, Ketonen, Ethern, Alkoholen, und Säuren ausgewählte emulgierte, solubilisierte, aufgelöste oder beigemischte Öle enthält, deren Löslichkeit in Wasser nicht 3 Gew.-% übersteigt, und worin die Löslichkeit von Phenmedipham im Öl (den Ölen) nicht 3 Gew.-% übersteigt, so dass der gesamte Ölgehalt der bezeichneten Ölkomponenten 4-85 Gew.-% beträgt, und worin die erwähnten herbiziden Zusammensetzungen ferner einen oder mehrere Emulgatoren in einer Menge von 1-40 Gew.-

% enthalten, und worin die herbiziden Zusammensetzungen wahlfrei Wasser und wahlfrei einen Füllstoff enthalten, und worin die Flüssigkeitsphase, wenn sie mit Wasser vermischt ist, eine Ölin-Wasser-Emulsion oder Mikroemulsion bilden kann, wobei erwähnte herbizide Zusammensetzungen dadurch **gekennzeichnet** sind, dass sie mindestens ein Polymer enthalten, welches bei 60°C ein Feststoff ist, und welches vorzugsweise durch seine Selbstdilatation bei 20°C in Wasser beständig verdünnbar/auflösbar wird, und welches gleichzeitig ein Molekulargewicht von mindestens 7.000 Dalton aufweist, dass das Polymer weder Polycarboxylate noch Co-Polymere von Oxyethylen und Oxypropylen mit mindestens 80 Gew.-% Polyoxyethylen und Polyoxypropylen, oder hydrophile Biopolymere enthält, deren Polymerisation über einen industriell kontrollierten Gärungsprozess durchgeführt worden ist, wobei das Polymer (die Polymere) unter nicht-ionischen Zellulose-Ethern, Polyvinylalkohol, Polyvinylalkohol-Derivaten, Polyvinylpyrrolidon und Polyvinylpyrrolidon-Derivaten ausgewählt ist (sind), und worin der Gesamtinhalt der Polymerverbindung(en) 0,03-25 Gew.% ausmacht, wobei der angegebene Gehalt in Prozenten von Verbindungen der Zusammensetzung auf Basis des Gewichts der gesamten Zusammensetzung berechnet ist.

2. Herbizide Zusammensetzungen nach Anspruch 1, dadurch **gekennzeichnet,** dass es Phenmedipham in Verbindung mit Ethofumesat und/oder Metamitron enthaltende Zwei- oder Multikomponenten-Zusammensetzungen sind.

3. Herbizide Zusammensetzungen nach Anspruch 1 oder 2, dadurch **gekennzeichnet,** dass erwähnte Polymere ein Teil der Zusammensetzung in einer Menge von 0,04-15 Gew.%, vor allem 0,05-8 Gew.%, vorzugsweise 0,07-5 Gew.-%, eher 0,1-3% Gew.-%, und insbesondere 0,15 -1,5 Gew.-% bilden, wobei der angegebene Gehalt in Prozentenauf Basis des Gewichts der gesamten Zusammensetzung berechnet ist.

4. Herbizide Zusammensetzungen nach Anspruch 1-3, dadurch **gekennzeichnet,** dass die gesamte Menge von Herbiziden 1-45 Gew.-%, berechnet auf Basis des Gewichts der gesamten Zusammensetzung, beträgt.

5. Herbizide Zusammensetzungen nach Anspruch 1-4, dadurch **gekennzeichnet,** dass der Gesamtinhalt der Ölbestandteile 1-45 Gew.-%, berechnet auf Basis des Gewichts der gesamten Zusammensetzung, beträgt.

6. Herbizide Zusammensetzungen nach Anspruch 1-5, dadurch **gekennzeichnet,** dass die Löslichkeit des Öls oder der Öle in Wasser bei 20°C nicht 2%, vor allem nicht 1%, übersteigt, und dass die Löslichkeit von Phenmedipham in dem betreffenden Öl (den Ölen) nicht 2%, vor allem nicht 1%, übersteigt.

7. Herbizide Zusammensetzungen nach Anspruch 1-6, dadurch **gekennzeichnet,** dass die gesamte Menge von Herbiziden 4-40 Gew.-%, vor allem 7-35 Gew.-%, und insbesondere 10-30 Gew.-%, berechnet auf Basis des Gewichts der gesamten Zusammensetzung, beträgt.

8. Herbizide Zusammensetzungen nach Anspruch 1-6, dadurch **gekennzeichnet,** dass der gesamte Ölgehalt 12-77 Gew.-%, vor allem 18-70%, und insbesondere 25-64%, berechnet auf Basis des Gewichts der gesamten Zusammensetzung, beträgt.

9. Herbizide Zusammensetzungen nach Anspruch 1-6, dadurch **gekennzeichnet,** dass der gesamte Inhalt an Emulgatoren 1-30 Gew.-%, eher 1-18 Gew.-%, vorzugsweise 1,5-13 Gew.-%, und insbesondere 2,5-5 Gew.-%, berechnet auf Basis des Gewichts der gesamten Zusammensetzung, beträgt.

10. Herbizide Zusammensetzungen nach Anspruch 1-9, dadurch **gekennzeichnet,** dass das Molekulargewicht des/der in Wasser verdünnbaren/auflösbaren Polymers(e) mindestens 10.000 Dalton und vor allem nicht weniger als 13.000 Dalton beträgt.

11. Herbizide Zusammensetzungen nach Anspruch 1-10, dadurch **gekennzeichnet,** dass die nichtionischen Zellulose-Ether unter ($C_{1-2}$-Alkyl)-zellulose, ((Poly)hydroxy-$C_{1-6}$-alkyl)-zellulose und ((Poly)hydroxy$C_{1-6}$-alkyl)-($C_{1-12}$-alkyl)-zellulose ausgewählt sind.

12. Herbizide Zusammensetzungen nach Anspruch 11, dadurch **gekennzeichnet,** dass die nichtionischen Zellulose-Ether unter Methyl-zellulose, (Poly) hydroxyethyl-zellulose, (Poly)hydroxypropyl-zellulose, (Poly)hydroxybutyl-zellulose, (Poly)hydroxyethylmethyl-zellulose, (Poly)hydroxyethylethyl-zellulose, (Poly)hydroxypropylmethyl-zellulose und (Poly)hydroxybutylmethyl-zellulose und deren hydrophobisch modifizierten Varianten, vorzugsweise Reaktionsprodukten ausgewählt sind, worin die definierten Zellulose-Ether mit Aldehyden oder difunktionalen Aldehyden reagiert haben.

**13.** Herbizide Zusammensetzungen nach Anspruch 1-10, dadurch **gekennzeichnet,** dass die Polyvinylalkohol-Derivate unter Polyvinylalkoholen ausgewählt sind, worin bis zu 35%, vorzugsweise 1-30% und insbesondere 8-15% der Alkoholgruppen des Polyvinylalkohols mit einer $C_{1-4}$ Hydrocarbyl-carbonsäure verestert sind, oder worin der Polyvinylalkohol ganz oder teilweise in Methyl- oder Ethylether umgesetzt ist, oder Co-Polymerisaten, worin der Polyvinylalkohol oder Polyvinylalkohol-Acetat mit mindestens 35% pro Molekül Anteil nehmen.

**14.** Herbizide Zusammensetzungen nach Anspruch 1-10, dadurch **gekennzeichnet**, dass die Polyvinylpyrrolidon-Derivate unter alkyliertem Polyvinylpyrrolidon und Polyvinylpyrrolidon-Co-Polymerisaten ausgewählt sind, worin mindestens 25 Mol-% des Co-Polymers aus Vinylpyrrolidon besteht.

**15.** Herbizide Zusammensetzungen nach Anspruch 1-14, dadurch **gekennzeichnet,** dass das Molekulargewicht der in Wasser auflösbaren/verdünnbaren Polymere unter 800.000, eher unter 500.000, vor allem unter 175.000 und insbesondere unter 125.000 Dalton ist.

**16.** Herbizide Zusammensetzungen nach Anspruch 1-15, dadurch **gekennzeichnet,** dass die Öle unter Carbonhydrid-Ölen oder Esterölen mit einer bzw. zwei Estergruppen pro Molekül ausgewählt sind.

**17.** Herbizide Zusammensetzungen nach Anspruch 1-16, dadurch **gekennzeichnet,** dass der Siedebeginn des Öles nicht weniger als 180°C, vorzugsweise nicht weniger als 210°C, vor allem nicht weniger als 230°C und insbesondere nicht weniger als 250°C ist.

**18.** Herbizide Zusammensetzungen nach Anspruch 16, dadurch **gekennzeichnet,** dass das Carbonhydrid-Öl (die Öle) einen nach DIN 51775 bestimmten Anilinpunkt aufweisen, der nicht 90°C, vor allem nicht 87,5°C und insbesondere nicht 82,5°C übersteigt.

**19.** Herbizide Zusammensetzungen nach Anspruch 16, dadurch **gekennzeichnet,** dass es sich bei den Esterölen mit einer oder zwei Estergruppen pro Molekül um jene handelt, deren Anzahl von Kohlenstoffatomen im Bereich von 8 bis 72, vorzugsweise 10 bis 60 und vor allem 12 bis 46 Kohlenstoffatome pro Molekül liegt.

**20.** Herbizide Zusammensetzungen nach Anspruch 1-19, dadurch **gekennzeichnet,** dass die Emulgatoren mindestens einen nicht-ionischen Emulgator und mindestens einen anionischen Emulgator umfassen.

**21.** Herbizide Zusammensetzungen nach Anspruch 1-20, dadurch **gekennzeichnet,** dass diese als ein vom Benutzer verdünntes, zum Gebrauch bereites Gemisch erhältlich sind, wobei der angegebene Gehalt in Prozenten auf Basis des Gewichts des Feststoffgehalts des Gemischs, wie in der Beschreibung angegeben, berechnet ist.

**22.** Herbizide zum Gebrauch bereite Verdünnungen, worin der herbizide Bestandteil in feinkörniger Form in einer ölhaltigen Wasserphase suspendiert ist, und worin die Wasserphase ferner mindestens einen aus der Gruppe von Rübenherbiziden bestehend aus Phenmedipham (Methyl-(3-(3-tolyl-carbamoyloxy)phenyl)carbamat), Ethofumesat ((±)Ethoxy-2,3-dihydro-3,3-dimethylbenzofuran-5-yl, methan-sulfonat) und Metamitron (4-Amino-4,5-dihydro-3-methyl-6-phenyl-1,2,4-triazin-5-on) ausgewählten Bestandteil enthält, so dass die gesamte Menge von Herbizid 0,1 bis 4 Gew.-% beträgt, und worin die Wasserphase ein oder mehrere emulgierte, solubilisierte oder bei-gemischte Öle mit einem Siedebeginn von 210°C enthält, welches Öl (welche Öle) unter Mineralölen, Triglyceridesterölen und Esterölen mit einer oder zwei Estergruppen pro Molekül und mit 8 bis 72 Kohlenstoffatomen pro Molekül, deren Löslichkeit in Wasser bei 20°C nicht 3 Gew.-% übersteigt, so dass der gesamte Ölgehalt der bezeichneten Ölbestandteile 0,1-4 Gew.-% beträgt, ausgewählt sind, und worin erwähnte herbizide, zum Gebrauch bereite Verdünnungen einen oder mehrere Emulgatoren in einer Menge von 0,01-2 Gew.-% enthalten, wobei erwähnte herbizide Zusammensetzungen dadurch **gekennzeichnet** sind, dass sie 0,005-0,8 Gew.-% von mindestens einem Polymer enthalten, welches bei 60°C ein Feststoff ist, und welches vorzugsweise durch eine Selbstdilatation bei 20°C in Wasser beständig verdünnbar/auflösbar ist und gleichzeitig ein Molekulargewicht von mindestens 7.000 Dalton aufweist, dass das Polymer weder Polycarboxylate noch Co-Polymere von Oxyethylen und Oxypropylen mit mindestens 80 Gew.-% Polyoxyethylen und Polyoxypropylen, oder hydrophile Biopolymere enthält, deren deren Polymerisation über einen industriell kontrollierten Gärungsprozess durchgeführt worden ist, wobei das Polymer (die Polymere) unter nicht-ionischen Zellulose-Ethern, Polyvinylalkohol, Polyinylalkohol-Derivaten, Polyvinylpyrrolidon und Polyinylpyrrolidon-Derivaten ausgewählt ist (sind), und worin die bevorzugten Polymere ausserdem in Übereinstimmung mit den vorhergehenden Ansprüchen 10-16 näher bezeichnet sind, wobei der angebenene Gehalt in Prozenten der Zusammensetzung auf Basis des Gewichts der gesamten für den Gebrauch fertigen Lösung berechnet ist.

## Revendications

1. Compositions herbicides dans lesquelles le composant herbicide est mis en suspension sous forme de grains fins dans une phase liquide contenant de l'huile, susceptible de s'écouler, contenant au moins un composant choisi parmi le groupe suivant d'herbicides pour betterave : composés de phenmédipham (méthyl(3-(3-tolylcarbamoyloxy)-phényl)carbamate), d'éthofumesate ((±)-2-éthoxy-2,3-dihydro-3,3-diméthylbenzofuran-5-yl, méthane sulfonate) et de métamitron (4-amino-4,5-dihydro-3-méthyl-6-phényl-1,2,4-triazin-5-one), de sorte que la quantité totale d'herbicide représente 1 à 50% en poids, et dans lesquelles la phase liquide contient une ou plusieurs huiles mélangées, dissoutes, solubilisées ou émulsifiées choisies parmi les huiles d'hydrocarbures, les huiles d'ester triglycéride, les huiles d'ester avec un ou deux groupes ester, respectivement, par molécule, et les aldéhydes, les cétones, les éthers, les alcools et les acides aliphatiques, dont la solubilité dans l'eau ne dépasse pas 3% en poids et dans lesquelles la solubilité de phenmédipham dans la ou les huiles ne dépasse pas 3% en poids de sorte que la teneur totale en huile des composants d'huile définis représente de 4 à 85% en poids, et dans lesquelles lesdites compositions herbicides contiennent de plus un ou plusieurs émulsifiants à raison de 1 à 40% en poids, et dans lesquelles les compositions herbicides contiennent éventuellement de l'eau et éventuellement une charge et dans lesquelles la phase liquide est capable de former une émulsion ou une microémulsion huile-dans-eau quand la composition est mélangée avec de l'eau, lesdites compositions herbicides étant caractérisées par le fait qu'elles contiennent au moins un polymère qui à 60°C est une substance solide et qui, de préférence, par l'intermédiaire de la seule dilatation à 20°C devient diluable/soluble de façon stable dans l'eau et qui au même moment, possède une masse moléculaire d'au moins 7,000 daltons, en ce que le polymère ne contient ni polycarboxylates, ni copolymères d'oxyéthylène et d'oxypropylène avec au moins 80% en poids de polyoxyéthylène et de polyoxypropylène, ni biopolymères hydrophiles pour lesquels la polymérisation a été effectuée par un procédé de fermentation maîtrisé industriellement, le ou lesdits polymères étant choisis parmi les éthers non ioniques de cellulose, le poly(alcool vinylique), les dérivés de poly(alcool vinylique), la polyvinylpyrrolidone et les dérivés de polyvinylpyrrolidone, et dans lesquelles la teneur totale du ou des composés polymères représentent de 0,03 à 25% en poids, tous les pourcentages indiqués de formulations de la composition étant calculés sur la base du poids de la composition totale.

2. Compositions herbicides selon la revendication 1, caractérisées en ce qu'elles sont des compositions à deux composants ou à composants multiples contenant le phenmédipham en combinaison avec l'éthofumesate et/ou le métamitron.

3. Compositions herbicides selon l'une des revendications 1 ou 2, caractérisées en ce que lesdits polymères forment une partie de la composition à raison de 0,04 à 15% en poids, en particulier, à raison de 0,05 à 8% en poids, de préférence à raison de 0,07 à 5% en poids, plutôt à raison de 0,1 à 3% en poids et forment particulièrement de 0,15 à 1,5% en poids, les pourcentages indiqués étant calculés sur la base du poids de la composition totale.

4. Compositions herbicides selon l'une des revendications 1 à 3, caractérisées en ce que la quantité totale d'herbicide s'élève de 1 à 45% en poids, calculée sur la base du poids de la composition totale.

5. Compositions herbicides selon l'une des revendications 1 à 4, caractérisées en ce que la teneur totale en composants d'huile représente 8 à 85% en poids, calculée sur la base du poids de la composition totale.

6. Compositions herbicides selon l'une des revendications 1 à 5, caractérisées en ce que la solubilité de l'huile ou des huiles dans l'eau à 20°C ne dépasse pas 2%, en particulier ne dépasse pas 1% et en ce que la solubilité de phenmédipham dans la ou les huiles présentes ne dépasse pas 2%, en particulier ne dépasse pas 1%.

7. Compositions herbicides selon l'une des revendications 1 à 6, caractérisées en ce que la quantité totale d'herbicide s'élève à 4-40% en poids, en particulier à 7-35% en poids et, en particulier, à 10-30% en poids, calculée sur la base du poids de la composition totale.

8. Compositions herbicides selon l'une des revendications 1 à 6, caractérisées en ce que la teneur totale en huile représente 12 à 77% en poids, en particulier 18 à 70% en poids et particulièrement 25 à 64% en poids, calculée sur la base du poids de la composition totale.

9. Compositions herbicides selon l'une des revendications 1 à 6, caractérisées en ce que la teneur totale en émulsifiant représente 1 à 30% en poids, plutôt 1 à 18% en poids, de préférence 1,5 à 13% en poids, en particulier 2 à 9% en poids et particulièrement 2,5 à 5% en poids, calculée sur la base du poids de la composition totale.

**10.** Compositions herbicides selon l'une des revendications 1 à 9, caractérisées en ce que la masse moléculaire des polymères diluables/solubles dans l'eau s'élève à au moins 10 000 daltons et, en particulier, n'est pas inférieure à 13 000 daltons.

**11.** Compositions herbicides selon l'une des revendications 1 à 10, caractérisées en ce que les éthers non ioniques de cellulose sont choisis parmi les (alkyl en $C_1$ à $C_2$)cellulose, ((poly)hydroxy-(alkyl en $C_1$ à $C_6$))cellulose et ((poly)-hydroxyalcoxy-(alkyl en $C_1$ à $C_6$))-(alkyl en $C_1$ à $C_{12}$)-cellulose.

**12.** Compositions herbicides selon la revendication 11, caractérisées en ce que les éthers non ioniques de cellulose sont choisis parmi la méthylcellulose, la (poly)hydroxyéthylcellulose, la (poly)hydroxypropylcellulose, la (poly)hydroxybutylcellulose, la (poly)hydroxyéthylméthylcellulose, la (poly)hydroxyéthyléthylcellulose, la (poly)hydroxypropylméthylcellulose et la (poly)hydroxybutylméthylcellulose et leurs variantes modifiées de manière hydrophobe, de préférence les produits réactionnels dans lesquels les éthers cellulosiques définis ont réagi avec des aldéhydes ou des aldéhydes difonctionnels.

**13.** Compositions herbicides selon l'une des revendications 1 à 10, caractérisées en ce que les dérivés de poly(alcool vinylique) sont choisis parmi le poly(alcool vinylique), dans lequel jusqu'à 35%, de préférence de 1 à 30% et en particulier de 8 à 15% des groupes alcooliques du poly(alcool vinylique) sont estérifiés avec un acide hydrocarbyl-carboxylique en $C_1$ à $C_4$ ou dans lequel le poly(alcool vinylique) est entièrement ou partiellement converti en éther méthylique ou éthylique, ou en copolymérisats, dans lesquels le poly(alcool vinylique) ou l'acétate de poly(alcool vinylique) participent à raison d'au moins 35% par molécule.

**14.** Compositions herbicides selon l'une des revendications 1 à 10, caractérisées en ce que les dérivés de polyvinyl-pyrrolidone sont choisis parmi la polyvinylpyrrolidone alkylée et les copolymérisats de polyvinylpyrrolidone, dans lesquels au moins 25% en moles du copolymère sont constitués par la vinylpyrrolidone.

**15.** Compositions herbicides selon l'une des revendications 1 à 14, caractérisées en ce que la masse moléculaire des polymères solubles/diluables dans l'eau est inférieure à 800 000, plutôt inférieure à 500 000, en particulier inférieure à 175 000 et particulièrement inférieure à 125 000 daltons.

**16.** Compositions herbicides selon l'une des revendications 1 à 15, caractérisées en ce que les huiles sont choisies parmi les huiles d'hydrocarbures et les huiles d'ester avec un ou deux groupes ester, respectivement, par molécule.

**17.** Compositions herbicides selon l'une des revendications 1 à 16, caractérisées en ce que le point d'ébullition initial de l'huile n'est pas inférieur à 180°C, de préférence pas inférieur à 210°C, en particulier pas inférieur à 230°C et particulièrement, pas inférieur à 250°C.

**18.** Compositions herbicides selon la revendication 16, caractérisées en ce que la ou les huiles d'hydrocarbures possèdent un point d'aniline déterminé selon DIN 51775 qui ne dépasse pas 90°C, en particulier ne dépasse pas 87,5°C, et en particulier ne dépasse pas 82,5°C.

**19.** Compositions herbicides selon la revendication 16, caractérisées en ce que les huiles ester avec un ou deux groupes ester par molécule sont celles dont le nombre d'atomes de carbone est compris entre 8 et 72, de préférence entre 10 et 60 et en particulier entre 12 et 46 atomes de carbone par molécule.

**20.** Compositions herbicides selon l'une des revendications 1 à 19, caractérisées en ce que les émulsifiants comprennent au moins un émulsifiant non ionique et au moins un émulsifiant anionique.

**21.** Compositions herbicides selon l'une des revendications 1 à 20, caractérisées en ce qu'elles sont disponibles en tant que mélange prêt-à-l'emploi dilué par l'utilisateur, tous les pourcentages indiqués étant calculés sur la base du poids de la teneur en solides dudit mélange, comme défini dans la description.

**22.** Dilutions herbicides prêtes-à-l'emploi dans lesquelles le composant herbicide est mis en suspension sous forme de grains fins dans une phase aqueuse contenant de l'huile et dans lesquelles la phase aqueuse contient de plus au moins un composant choisi dans le groupe d'herbicides pour betterave formé par le phenmédipham (méthyl-(3-(3-tolylcarbamoyloxy)phényl)carbamate), l'éthofumesate ((±)-2-éthoxy-2,3-dihydro-3,3-diméthylbenzofuran-5-yl, méthane sulfonate) et le métamitron (4-amino-4,5-dihydro-3-méthyl-6-phényl-1,2,4-triazin-5-one), de sorte que la quantité totale d'herbicide représente 0,1 à 4% en poids, et dans lesquelles la phase aqueuse contient une ou plusieurs huiles émulsifiées, solubilisées ou mélangées avec un point d'ébullition initial d'au moins 210°C choisies

parmi les huiles minérales, les huiles d'ester de triglycéride et les huiles d'ester avec un ou deux groupes ester par molécule et avec 8 à 72 atomes de carbone par molécule et dont la solubilité dans l'eau à 20°C ne dépasse pas 3% en poids de sorte que la teneur totale en huile des composants d'huile définis représente 0,1 à 4% en poids, et dans lesquelles lesdites dilutions herbicides prêtes-à-l'emploi contiennent un ou plusieurs émulsifiants à raison de 0,01 à 2% en poids, lesdites compositions herbicides étant caractérisées en ce qu'elles contiennent de 0,005 à 0,8% en poids d'au moins un polymère qui à 60°C est une substance solide, et qui, de préférence, par l'intermédiaire de la seule dilatation à 20°C est diluable/soluble de façon stable dans l'eau et qui en même temps possède une masse moléculaire d'au moins 7 000 daltons, et en ce que le polymère ne comprend ni des polycarboxylates, ni des copolymères d'oxyéthylène et d'oxypropylène avec au moins 80% en poids de polyoxyéthylène et de polyoxypropylène, ou de biopolymères hydrophiles pour lesquels on a effectué la polymérisation par un procédé de fermentation maîtrisé industriellement, le ou lesdits polymères étant choisis parmi les éthers non ioniques de cellulose, le poly(alcool vinylique), les dérivés de poly(alcool vinylique), la polyvinylpyrrolidone et les dérivés de polyvinylpyrrolidone, et dans lesquelles les polymères préférés sont en outre définis encore conformément à l'une des revendications précédentes 10 à 16, tous les pourcentages indiqués de la composition étant calculés sur la base du poids de la solution prête-à-l'emploi totale.